(19) Europäisches Patentamt
European Patent Office
Office européen des brevets

(11) EP 2 542 004 B1

(12) EUROPEAN PATENT SPECIFICATION

(45) Date of publication and mention
of the grant of the patent:
**10.06.2020 Bulletin 2020/24**

(51) Int Cl.:
*H04W 72/04* (2009.01)     *H04L 5/00* (2006.01)

(21) Application number: **10848774.5**

(22) Date of filing: **17.12.2010**

(86) International application number:
**PCT/CN2010/079944**

(87) International publication number:
**WO 2011/120316 (06.10.2011 Gazette 2011/40)**

(54) **CONFIGURATION METHOD AND SYSTEM FOR SOUNDING REFERENCE SIGNAL IN LONG TERM EVOLUTION-ADVANCED SYSTEM**

KONFIGURATIONSVERFAHREN UND SYSTEM FÜR EIN TONREFERENZSIGNAL IN EINEM LTE-ADVANCED-SYSTEM

PROCÉDÉ ET SYSTÈME DE CONFIGURATION POUR UN SIGNAL DE RÉFÉRENCE DE SONDAGE DANS UN SYSTÈME DE TYPE LONG TERM EVOLUTION-ADVANCED

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.04.2010 CN 201010157091**

(43) Date of publication of application:
**02.01.2013 Bulletin 2013/01**

(73) Proprietor: **ZTE Corporation
Shenzhen, Guangdong 518057 (CN)**

(72) Inventors:
• **HAO, Peng
Shenzhen
Guangdong 518057 (CN)**
• **YU, Bin
Shenzhen
Guangdong 518057 (CN)**

(74) Representative: **Aipex B.V.
P.O. Box 30223
3001 DE Rotterdam (NL)**

(56) References cited:
EP-A1- 2 426 831     CN-A- 1 981 447
CN-A- 101 540 631    CN-A- 101 690 066
CN-A- 101 808 409

• **ERICSSON ET AL: "Further Discussions on SRS Enhancements", 3GPP DRAFT; R1-100860, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418466, [retrieved on 2010-02-16]**
• **NOKIA SIEMENS NETWORKS ET AL: "Channel sounding enhancements for LTE-Advanced uplink", 3GPP DRAFT; R1-101438, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418900, [retrieved on 2010-02-16]**
• **CATT: "SRS Enhancements for LTE-A", 3GPP DRAFT; R1-100893, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418495, [retrieved on 2010-02-16]**

- PANTECH: "Further consideration on Aperiodic/Periodic Sounding RS", 3GPP DRAFT; R1-100993, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418573, [retrieved on 2010-02-16]
- ASUSTEK: "Discussion on Dynamic Aperiodic Sounding", 3GPP DRAFT; R1-100997 DISCUSSION ON DYNAMIC APERIODIC SOUNDING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418577, [retrieved on 2010-02-16]
- MOTOROLA: "Views on SRS Enhancements for LTE-A", 3GPP DRAFT; R1-101134 - SRS ENHANCEMENTS LTE-A, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 17 February 2010 (2010-02-17), XP050418982, [retrieved on 2010-02-17]

**Description**

Technical Field

The present invention relates to the field of communication, and specifically, to a configuration method and system for a sounding reference signal in a Long Term Evolution Advanced (LTE-A) system.

Background of the Related Art

In a Long Term Evolution (LTE) system, according to configuration information of an e-node-B (eNB), a User Equipment (UE) uses a certain resource to transmit a Sounding Reference Signal (SRS) periodically at a certain time location and frequency location. The eNB measures a radio Channel State Information (CSI) according to the received SRS, and performs operations such as scheduling, power control and resource allocation and so on according to the obtained CSI.

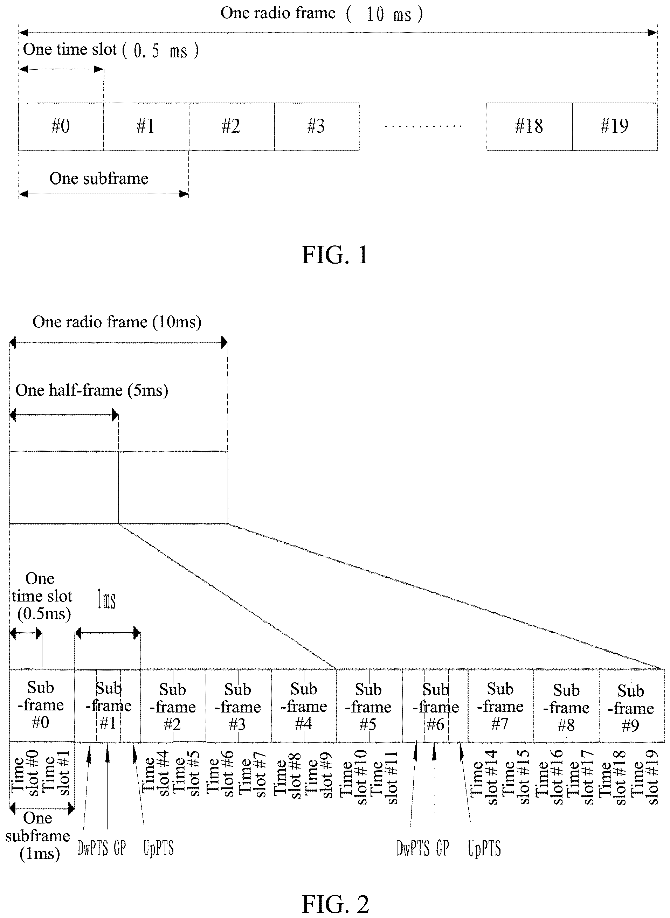

In the LTE system, a frame structure of Frequency Division Duplex (FDD) mode (also called as frame structure type 1) and a frame structure of Time Division Duplex (TDD) mode (also called as frame structure type 2) are as shown in FIG. 1 and FIG. 2 respectively, wherein, a radio frame of 10ms (307200Ts, 1ms=30720 Ts) consists of 10 1ms subframes, each common subframe is divided into two time slots, each time slot is 0.5ms, and a special subframe in the TDD mode includes three special time slots, namely, a Downlink Pilot Time Slot (DwPTS), a Guard Period (GP) and an Uplink Pilot Time Slot (UpPTS) respectively.

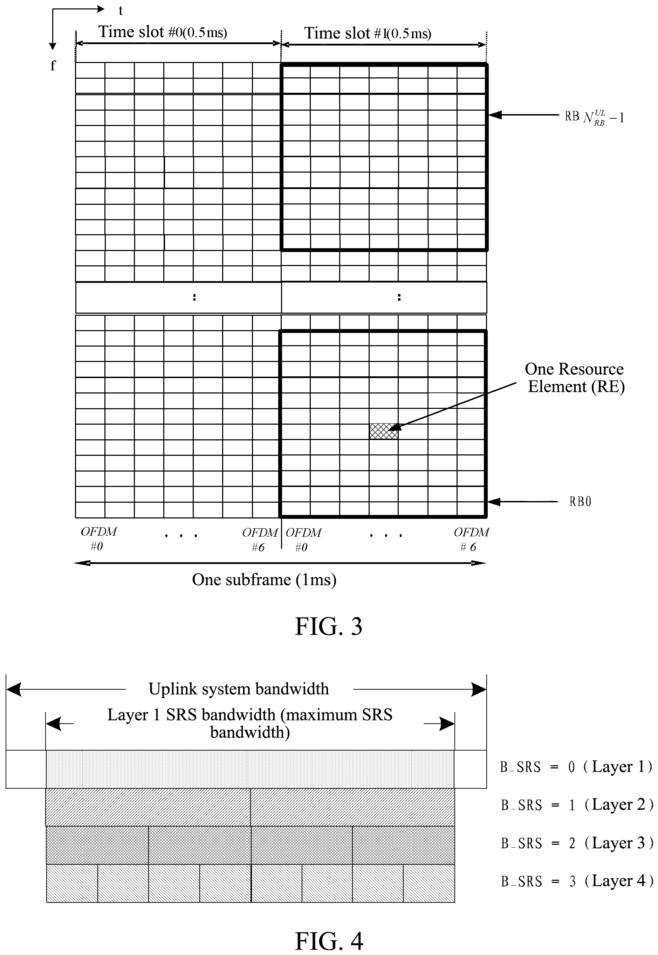

The resource allocation in the LTE system takes a Resource Block (RB) (or called as a Physical Resource Block (PRB)) as a unit, one RB occupies 12 Resource Elements (REs) in a frequency domain and one time slot in a time domain, that is, 7 (Normal cyclic prefix (Normal CP)) or 6 (Extended cyclic prefix (Extended CP)) Single Carrier Frequency-Division Multiple Access (SC-FDMA) symbols. If a total number of RBs corresponding to an uplink system bandwidth in the frequency domain is defined as $N_{RB}^{UL}$, indexes of the RB are 0,1,..., $N_{RB}^{UL}-1$, indexes of a sub-carrier (or called as the RE) are 0,1,..., $N_{RB}^{UL} \cdot N_{SC}^{RB} -1$, and $N_{SC}^{RB}$ is the number of sub-carriers corresponding to one RB in the frequency domain. A structure of the RB is as shown in FIG. 3 (a common CP is taken as an example).

In the LTE system, the SRS is sent periodically, and the configuration information therein includes following contents.

SRS Bandwidth Configuration and SRS Bandwidth

In the LTE system, frequency domain bandwidth of the SRS is configured using a tree structure. As shown in FIG. 4, each kind of SRS bandwidth configuration corresponds to one tree structure, in the structure of FIG. 4, there are four layers, B_SRS=0~4, in total, and an SRS-Bandwidth of the top layer (B_SRS=0) corresponds to the maximum bandwidth (or called as an SRS bandwidth scope) of the SRS bandwidth configuration. From Table 1 to Table 4, SRS bandwidth configurations within different uplink bandwidth scopes are given. SRS bandwidth configuration ($C_{SRS}$)=1 in Table 1 is taken as an example, B_SRS (i.e. $B_{SRS}$ in Table 1)=0 is layer 0, which is the top layer of the tree structure, and the SRS-Bandwidth corresponding to this layer is the bandwidth corresponding to 32 RBs, which is the maximum SRS-Bandwidth of the SRS bandwidth configuration; B_SRS=1 is layer 1, the SRS-Bandwidth of this layer is the bandwidth corresponding to 16 RBs, and one SRS-Bandwidth of the upper layer is splitted into 2 SRS-Bandwidths of layer 1; B_SRS=2 is layer 2, the SRS-Bandwidth of this layer is the bandwidth corresponding to 8 RBs, and one SRS-Bandwidth of the upper layer is splitted into 2 SRS-Bandwidths of layer 2; B_SRS=3 is layer 3, the SRS-Bandwidth of this layer is the bandwidth corresponding to 4 RBs, and one SRS-Bandwidth of the upper layer is splitted into 2 SRS-Bandwidths of layer 3.

Table 1 $\left( 6 \leq N_{RB}^{UL} \leq 40 \right)$

| SRS bandwidth configuration $C_{SRS}$ | SRS-Bandwidth $B_{SRS} = 0$ | | SRS-Bandwidth ↓ $B_{SRS} = 1$ | | SRS-Bandwidth ↓ $B_{SRS} = 2$ | | SRS-Banddwidth ↓ $B_{SRS} = 3$ | |
|---|---|---|---|---|---|---|---|---|
| | $m_{SRS,b}$ | $N_b$ | $m_{SRS,b}$ | $N_b$ | $m_{SRS,b}$ | $N_b$ | $m_{SRS,b}$ | $N_b$ |
| 0 | 36 | 1 | 12 | 3 | 4 | 3 | 4 | 1 |
| 1 | 32 | 1 | 16 | 2 | 8 | 2 | 4 | 2 |

(continued)

| SRS bandwidth configuration $C_{SRS}$ | SRS-Bandwidth $B_{SRS} = 0$ | | SRS-Bandwidth $\downarrow$ $B_{SRS} = 1$ | | SRS-Bandwidth $\downarrow$ $B_{SRS} = 2$ | | SRS-Banddwidth $\downarrow$ $B_{SRS} = 3$ | |
|---|---|---|---|---|---|---|---|---|
| | $m_{SRS,b}$ | $N_b$ | $m_{SRS,b}$ | $N_b$ | $m_{SRS,b}$ | $N_b$ | $m_{SRS,b}$ | $N_b$ |
| 2 | 24 | 1 | 4 | 6 | 4 | 1 | 4 | 1 |
| 3 | 20 | 1 | 4 | 5 | 4 | 1 | 4 | 1 |
| 4 | 16 | 1 | 4 | 4 | 4 | 1 | 4 | 1 |
| 5 | 12 | 1 | 4 | 3 | 4 | 1 | 4 | 1 |
| 6 | 8 | 1 | 4 | 2 | 4 | 1 | 4 | 1 |
| 7 | 4 | 1 | 4 | 1 | 4 | 1 | 4 | 1 |

Table 2 $\left( 40 < N_{RB}^{UL} \le 60 \right)$

| SRS bandwidth configuration $C_{SRS}$ | SRS-Bandwidth $\downarrow$ $B_{SRS} = 0$ | | SRS-Bandwidth $\downarrow$ $B_{SRS} = 1$ | | SRS-Bandwidth $\downarrow$ $B_{SRS} = 2$ | | SRS-Bandwidth $\downarrow$ $B_{SRS} = 3$ | |
|---|---|---|---|---|---|---|---|---|
| | $m_{SRS,0}$ | $N_0$ | $m_{SRS,1}$ | $N_1$ | $m_{SRS,2}$ | $N_2$ | $m_{SRS,3}$ | $N_3$ |
| 0 | 48 | 1 | 24 | 2 | 12 | 2 | 4 | 3 |
| 1 | 48 | 1 | 16 | 3 | 8 | 2 | 4 | 2 |
| 2 | 40 | 1 | 20 | 2 | 4 | 5 | 4 | 1 |
| 3 | 36 | 1 | 12 | 3 | 4 | 3 | 4 | 1 |
| 4 | 32 | 1 | 16 | 2 | 8 | 2 | 4 | 2 |
| 5 | 24 | 1 | 4 | 6 | 4 | 1 | 4 | 1 |
| 6 | 20 | 1 | 4 | 5 | 4 | 1 | 4 | 1 |
| 7 | 16 | 1 | 4 | 4 | 4 | 1 | 4 | 1 |

Table 3 $\left( 60 < N_{RB}^{UL} \le 80 \right)$

| SRS bandwidth configuration $C_{SRS}$ | SRS-Bandwidth $\downarrow$ $B_{SRS} = 0$ | | SRS-Bandwidth $\downarrow$ $B_{SRS} = 1$ | | SRS-Bandwidth $\downarrow$ $B_{SRS} = 2$ | | SRS-Bandwidth $\downarrow$ $B_{SRS} = 3$ | |
|---|---|---|---|---|---|---|---|---|
| | $m_{SRS,b}$ 0 | $N_0$ | $m_{SRS,1}$ | $N_1$ | $m_{SRS,2}$ | $N_2$ | $m_{SRS,3}$ | $N_3$ |
| 0 | 72 | 1 | 24 | 3 | 12 | 2 | 4 | 3 |
| 1 | 64 | 1 | 32 | 2 | 16 | 2 | 4 | 4 |
| 2 | 60 | 1 | 20 | 3 | 4 | 5 | 4 | 1 |
| 3 | 48 | 1 | 24 | 2 | 12 | 2 | 4 | 3 |
| 4 | 48 | 1 | 16 | 3 | 8 | 2 | 4 | 2 |
| 5 | 40 | 1 | 20 | 2 | 4 | 5 | 4 | 1 |
| 6 | 36 | 1 | 12 | 3 | 4 | 3 | 4 | 1 |
| 7 | 32 | 1 | 16 | 2 | 8 | 2 | 4 | 2 |

Table 4 $\left( 80 < N_{RB}^{UL} \le 110 \right)$ 110)

| SRS bandwidth configuration $C_{SRS}$ | SRS-Bandwidth ↓ $B_{SRS} = 0$ | | SRS-Bandwidth ↓ $B_{SRS} = 1$ | | SRS-Bandwidth ↓ $B_{SFS} = 2$ | | SRS-Bandwidth ↓ $B_{SRS} = 3$ | |
|---|---|---|---|---|---|---|---|---|
| | $m_{SRS,b}0$ | $N_0$ | $m_{SRS,1}$ | $N_1$ | $m_{SRS,2}$ | $N_2$ | $m_{SRS,3}$ | $N_3$ |
| 0 | 96 | 1 | 48 | 2 | 24 | 2 | 4 | 6 |
| 1 | 96 | 1 | 32 | 3 | 16 | 2 | 4 | 4 |
| 2 | 80 | 1 | 40 | 2 | 20 | 2 | 4 | 5 |
| 3 | 72 | 1 | 24 | 3 | 12 | 2 | 4 | 3 |
| 4 | 64 | 1 | 32 | 2 | 16 | 2 | 4 | 4 |
| 5 | 60 | 1 | 20 | 3 | 4 | 5 | 4 | 1 |
| 6 | 48 | 1 | 24 | 2 | 12 | 2 | 4 | 3 |
| 7 | 48 | 1 | 16 | 3 | 8 | 2 | 4 | 2 |

Comb Configuration Information

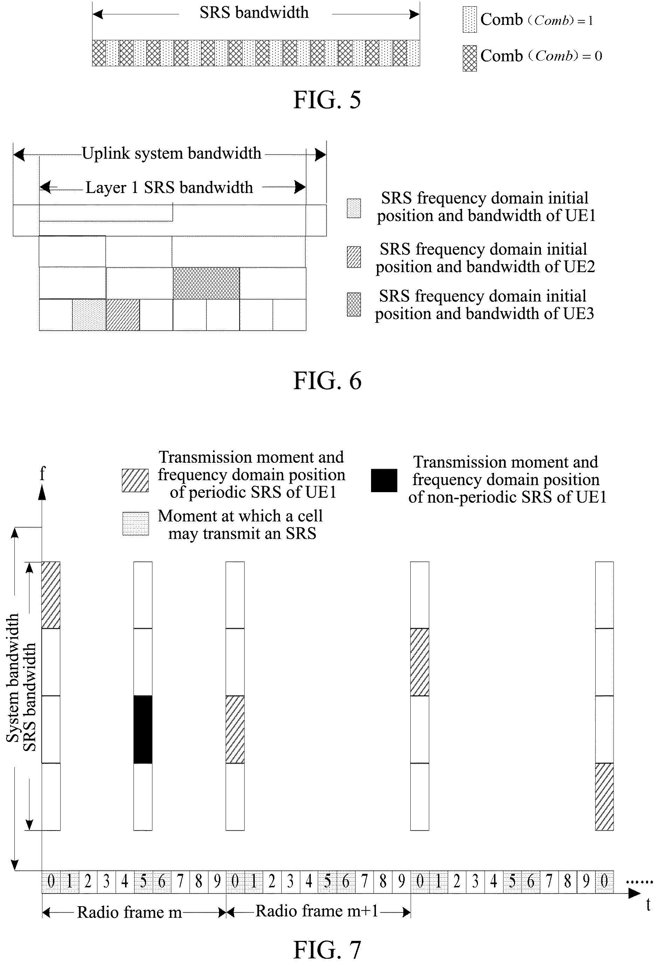

The sub-carriers of the SRS in the same SRS frequency band is placed at intervals, that is to say, a comb structure is used to transmit the SRS, wherein, the number of frequency combs is 2. As shown in FIG. 5, when each UE transmits the SRS, only one (comb=0 or comb=1) of the two frequency combs is used, and correspondingly, the UE only uses the sub-carrier of which a frequency domain index is an even number or uneven number to transmit the SRS. The comb structure allows more users to transmit SRSs in the same SRS bandwidth.

Sequence Configuration Information

An SRS sequence sent by the UE is obtained by performing cycle shift on a root sequence. Performing different cycle shifts $\alpha$ on the same root sequence can obtain different SRS sequences, and these obtained SRS sequences are mutual orthogonal with each other, therefore, these SRS sequences can be allocated to different UEs to use, so as to make these UEs transmit the SRSs simultaneously in the same time resource and frequency resource. In the LTE, the SRS sequence defines 8 cycle shifts, namely 0, 1, 2, 3, 4, 5, 6 and 7 respectively, which are indicated by 3bit signalings. That is to say, in the same time resource and frequency resource, the UE in a cell has 8 available code resources, and the eNB can configure at most 8 UEs to transmit the SRSs simultaneously.

Frequency Domain Initial Position and Frequency Hopping Information

The UE determines a frequency domain initial position for the UE itself transmitting the SRS according to an upper layer signaling $n_{RRC}$ sent from the eNB. As shown in FIG. 6, the UEs allocated with different $n_{RRC}$ signalings will transmit the SRSs in different domains of the cell SRS bandwidth. The UE will calculate an SRS frequency domain initial position of each SRS transmission period subsequently according to the frequency domain initial position and certain frequency hopping rules.

In the LTE system, the eNB firstly allocates an SRS bandwidth configuration index $C_{SRS}$ to all UEs in the cell, according to the number of RBs $\left( N_{RB}^{UL} \right)$ corresponding to the current uplink system bandwidth, can determine which one to be used in the Table 1~Table 4, and then according to the $C_{SRS}$, can determine the SRS bandwidth configuration used by the current cell. For a certain UE, the eNB will also allocate an SRS bandwidth index $B_{SRS}$ (or called as the index of the located layer) to the UE. According to the SRS bandwidth configuration in the cell and the bandwidth index $B_{SRS}$, the UE can obtain the SRS Bandwidth used by itself. In addition, the eNB will also appoint to each UE the SRS frequency domain initial position of the UE, and the UE calculates the frequency domain initial position of each moment for transmitting the SRS subsequently according to the initial position and certain frequency hopping rules.

SRS Period and Subframe Offset

Seen from the time domain, the UE only transmits the SRS on the last SC-FDMA symbol of the subframe. The UE transmitting a configuration of the SRS in the time domain is related to four parameters: a cell-specific period ($T_{SFC}$)

and a subframe offset ($\Delta_{SFC}$), a UE-specific period ($T_{SRS}$) and a subframe offset ($T_{offset}$). As shown in table 5 or 6, the cell-specific period and subframe offset give all the time domain subframe positions at which the UE may transmit the SRSs in the cell. For example, a configuration 8 in table 5, of which a period is 5 subframes and subframe offset is {2, 3}, means that the shortest SRS period in the current cell is 5ms and only two positions may be used to transmit the SRS in the 5ms, which are the subframe 2 and subframe 3 respectively in the 5 subframes (namely subframe 0, subframe 1.... subframe 4 respectively) within the 5ms. As shown in table 7 or 8, the UE-specific period and subframe offset give a specific time domain period and subframe positions for a certain UE transmitting the SRS. For example, a configuration 2 in table 7 means that an SRS period of a certain UE is 5ms, and the transmission is made on the subframe 0 in the 5 subframes (namely subframe 0, subframe 1.... subframe 4 respectively) within the 5ms. It should be noted that, a transmission position specified by the UE-specific parameters must be included in a cell-specific transmission position.

Table 5 FDD Cell Specific SRS period and subframe offset configuration

| srsSubframeConfiguration | Binary | Configuration Period $T_{SFC}$ (subframes) | Transmission offset $\Delta_{SFC}$ (subframes) |
|---|---|---|---|
| 0 | 0000 | 1 | {0} |
| 1 | 0001 | 2 | {0} |
| 2 | 0010 | 2 | {1} |
| 3 | 0011 | 5 | {0} |
| 4 | 0100 | 5 | {1} |
| 5 | 0101+' | 5 | {2} |
| 6 | 0110 | 5 | {3} |
| 7 | 0111 | 5 | {0,1} |
| 8 | 1000 | 5 | {2,3} |
| 9 | 1001 | 10 | {0} |
| 10 | 1010 | 10 | {1} |
| 11 | 1011 | 10 | {2} |
| 12 | 1100 | 10 | {3} |
| 13 | 1101 | 10 | (0,1,2,3,4,6,8) |
| 14 | 1110 | 10 | (0,1,2,3,4,5,6,8) |
| 15 | 1111 | reserved | reserved |

Table 6 TDD Cell Specific SRS period and subframe offset configuration

| srsSubframeConfiguration | Binary | Configuration Period $T_{SFC}$ (subframes) | Transmission offset $\Delta_{SFC}$ (subframes) |
|---|---|---|---|
| 0 | 0000 | 5 | {1} |
| 1 | 0001 | 5 | {1,2} |
| 2 | 0010 | 5 | {1,3} |
| 3 | 0011 | 5 | {1,4} |
| 4 | 0100 | 5 | {1,2,3} |
| 5 | 0101 | 5 | {1,2,4} |
| 6 | 0110 | 5 | {1,3,4} |
| 7 | 0111 | 5 | {1,2,3,4} |
| 8 | 1000 | 10 | {1,2,6} |
| 9 | 1001 | 10 | {1,3,6} |

(continued)

| srsSubframeConfiguration | Binary | Configuration Period $T_{SFC}$ (subframes) | Transmission offset $\Delta_{SFC}$ (subframes) |
|---|---|---|---|
| 10 | 1010 | 10 | {1,6,7} |
| 11 | 1011 | 10 | {1,2,6,8} |
| 12 | 1100 | 10 | {1,3,6,9} |
| 13 | 1101 | 10 | {1,4,6,7} |
| 14 | 1110 | reserved | reserved |
| 15 | 1111 | reserved | reserved |

Table 7 FDD UE Specific SRS period and subframe offset configuration

| **SRS Configuration** Index $I_{SRS}$ | **SRS Periodicity** $T_{SRS}$ (ms) | SRS **Subframe** Offset $T_{offset}$ |
|---|---|---|
| 0 - 1 | 2 | $I_{SRS}$ |
| 2 - 6 | 5 | $I_{SRS}$ - 2 |
| 7 - 16 | 10 | $I_{SRS}$ - 7 |
| **17** - 36 | 20 | $I_{SRS}$ - 17 |
| 37 - 76 | 40 | $I_{SRS}$ - 37 |
| 77 - 156 | 80 | $I_{SRS}$ - 77 |
| 157 - 316 | 160 | $I_{SRS}$ - 157 |
| 317 - 636 | 320 | $I_{SRS}$ - 317 |
| 637 - 1023 | reserved | reserved |

Table 8 TDD UE Specific SRS period and subframe offset configuration

| **SRS** Configuration Index $I_{SRS}$ | SRS Periodicity $T_{SRS}$ (ms) | **SRS Subframe** Offset $T_{offset}$ |
|---|---|---|
| 0 | 2 | 0, 1 |
| 1 | 2 | 0, 2 |
| 2 | 2 | 1, 2 |
| 3 | 2 | 0, 3 |
| 4 | 2 | 1, 3 |
| 5 | 2 | 0, 4 |
| 6 | 2 | 1, 4 |
| 7 | 2 | 2, 3 |
| 8 | 2 | 2, 4 |
| 9 | 2 | 3, 4 |
| 10 - 14 | 5 | $I_{SRS}$ - 10 |
| **15** - 24 | 10 | $I_{SRS}$ - 15 |
| 25 - 44 | 20 | $I_{SRS}$ - 25 |
| **45** - 84 | 40 | $I_{SRS}$ - **45** |
| 85 - 164 | 80 | $I_{SRS}$ - 85 |
| 165 - 324 | 160 | $I_{SRS}$ - **165** |

(continued)

| SRS Configuration Index $I_{SRS}$ | SRS Periodicity $T_{SRS}$ (ms) | SRS Subframe Offset $T_{offset}$ |
|---|---|---|
| 325 - 644 | 320 | $I_{SRS}$ - 325 |
| 645 - 1023 | reserved | reserved |

The LTE-A system is a further evolution of the LTE system. In this system, the eNB is required to obtain the channel information much faster so as to perform uplink resource allocation, scheduling and power control and use channel reciprocity to estimate a downlink channel. However, the current periodic SRS could not meet the demand of channel measurement.

ERICSSON ET AL: "Further Discussions on SRS Enhancements", 3GPP DRAFT; R1-100860, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 discloses adopting dynamic aperiodic transmission of reference signals for sounding and to support triggering of such transmission using the UL grant. It furthermore discusses alternatives for how to determine the UE specific parameters of the reference signal.

NOKIA SIEMENS NETWORKS ET AL: "Channel sounding enhancements for LTE-Advanced uplink", 3GPP DRAFT; R1-101438, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 discloses potential SRS enhancements discussed in e-mail reflector.

CATT: "SRS Enhancements for LTE-A", 3GPP DRAFT; R1-100893, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 discloses SRS Enhancements for LTE-A.

PANTECH: "Further consideration on Aperiodic/Periodic Sounding RS", 3GPP DRAFT; R1-100993, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 discloses Further consideration on Aperiodic/Periodic Sounding RS.

ASUSTEK: "Discussion on Dynamic Aperiodic Sounding", 3GPP DRAFT; R1-100997 DISCUSSION ON DYNAMIC APERIODIC SOUNDING, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 16 February 2010 discloses Discussion on Dynamic Aperiodic Sounding.

CN 101 540 631 A and EP 2 426 831 A1 disclose a multi-antenna transmitting method and apparatus for a Sounding Reference Signal (SRS). In the scheme of the present invention, in the case of transmitting the uplink SRSs with precoding, a UE can provide orthogonal resources to the different precoding matrixes by a CDM, or TDM, or FDM, or their combination; in the case of transmitting the uplink SRSs without precoding, the UE can transmit the SRSs in the orthogonal resources by the CDM, or TDM, or FDM, or their combination. The scheme of the present invention provides a practical implementation solution for transmitting the uplink SRSs in the multi-antenna case.

MOTOROLA: "Views on SRS Enhancements for LTE-A", 3GPP DRAFT; R1-101134-SRS ENHANCEMENTS LTE-A, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. San Francisco, USA; 20100222, 17 February 2010 discloses Views on SRS Enhancements for LTE-A.

Summary of the Invention

The technical problem required to be solved by the present invention is to provide a configuration method, system, eNB and user equipment for a sounding reference signal in an LTE-A system according to appended independent claims, so as to make the eNB trigger the UE to transmit the SRS and perform measurement on channel at any time. Further improvements and embodiments are provided in the dependent claims.

With the configuration method and system for the non-periodic SRS provided by the present invention, the resources used by the non-periodic SRS can be determined, channel measurement frequency of the UE can be enhanced, and channel measurement requirement of the LTE-A system can be better satisfied. In addition, by reserving non-periodic SRS resources, influence and conflict between the periodic SRS and non-periodic SRS in the LTE-A system can be avoided effectively.

Brief Description of Drawings

Here, the described accompanying drawings are used to provide a further understanding of the present invention and constitute a part of the present invention. The schematic examples and illustrations thereof of the present invention are used to explain the present invention, but do not constitute an inappropriate limitation on the present invention. In the drawings:

FIG. 1 is a schematic diagram of frame structure in an LTE FDD mode.

FIG. 2 is a schematic diagram of frame structure in an LTE TDD mode.

FIG. 3 is a structure diagram of a resource block.

FIG. 4 is a schematic diagram of tree structure of the SRS bandwidth.

FIG. 5 is a schematic diagram of comb structure of the SRS.

FIG. 6 is a schematic diagram of frequency domain initial position of the SRS bandwidth.

FIG. 7 is a schematic diagram of time-frequency position of the periodic SRS and non-periodic SRS according to example 1 of the present invention.

FIG. 8 is a schematic diagram of time-frequency position of the periodic SRS and non-periodic SRS according to example 2 of the present invention.

FIG. 9 is a schematic diagram of time-frequency position of the periodic SRS and non-periodic SRS according to example 3 of the present invention.

FIG. 10 is a schematic diagram of time-frequency position of the periodic SRS and non-periodic SRS according to example 4 of the present invention.

FIG. 11 is a schematic diagram of time-frequency position of the periodic SRS and non-periodic SRS according to example 5 of the present invention.

FIG. 12 is a schematic diagram of time-frequency position of the periodic SRS and non-periodic SRS according to example 6 of the present invention.

FIG. 13 is a schematic diagram of time-frequency position of the periodic SRS and non-periodic SRS according to example 7 of the present invention.

FIG. 14 is a schematic diagram of time-frequency position of the periodic SRS and non-periodic SRS according to example 8 of the present invention.

FIG. 15 is a schematic diagram of time-frequency position of the periodic SRS and non-periodic SRS according to example 9 of the present invention.

FIG. 16 is a schematic diagram of time-frequency position of the periodic SRS and non-periodic SRS according to example 10 of the present invention.

FIG. 17 is a schematic diagram of time-frequency position of the periodic SRS and non-periodic SRS according to example 11 of the present invention.

FIG. 18 is a schematic diagram of time-frequency position of the periodic SRS and non-periodic SRS according to example 12 of the present invention.

FIG. 19 is a schematic diagram of time-frequency position of the periodic SRS and non-periodic SRS according to another example of the present invention.

FIG. 20 is a schematic diagram of time-frequency position of the periodic SRS and non-periodic SRS according to another example of the present invention.

FIG. 21 is a schematic diagram of a configuration method for a sounding reference signal according to the present invention.

Preferred Embodiments of the Present Invention

In the present invention, in order to satisfy channel measurement requirements of an LTE-Advanced system, an aperiodic SRS configuration mechanism is disclosed, so as to make an eNB can trigger a UE to transmit an SRS and perform channel measurement at any time (anytime at which the eNB considers a need). In the present invention, resources for transmitting a periodic SRS are called as periodic SRS resources, and resources for transmitting an aperiodic SRS are called as non-periodic SRS resources.

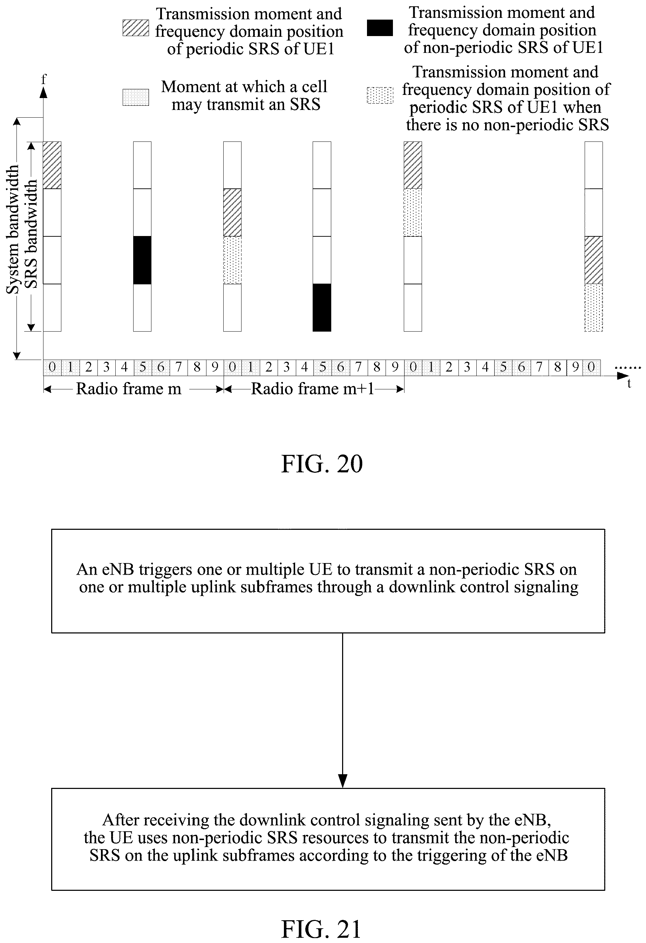

The inventive concept of the present invention is as shown in FIG. 21, including: an eNB triggering one or multiple UEs to transmit an aperiodic SRS on one or multiple uplink subframes through a downlink control signaling.

It also includes: after receiving the downlink control signaling sent by the eNB, the UE using non-periodic SRS resources to transmit the non-periodic SRS on the uplink subframes according to the triggering of the eNB.

The number of the uplink subframes is informed by the eNB to the UE through an upper layer signaling or a physical layer signaling, or is appointed by the eNB and UE.

If the non-periodic SRS is triggered to be transmitted on one uplink subframe, the first subframe in the uplink subframes hereinafter refers to the uplink subframe; and if the non-periodic SRS is triggered to be transmitted on multiple uplink subframes, the first subframe in the uplink subframes hereinafter refers to a uplink subframe closest in time domain in the multiple uplink subframes.

Specifically, the eNB can pre-configure time-frequency configurations for transmitting the non-periodic SRS with the UE, at the point, the eNB can trigger the UE to transmit the non-periodic SRS only through a lbit downlink control signaling, which has a small overhead, and the downlink control signaling can be transmitted together with other signalings to the UE in a Physical Downlink Control Channel (PDCCH). Or, the eNB also can pre-configure the time-frequency configurations of a part of non-periodic SRSs with the UE, send another part of the configurations of non-periodic SRSs through the downlink control signaling, and trigger the UE to send the non-periodic SRSs through the downlink control signaling; and the UE determines time-frequency positions for transmitting the non-periodic SRSs according to a previous time-frequency configuration and the time-frequency configurations sent by the eNB. Or, the eNB also can send all the configurations through the downlink control signaling, and meanwhile, trigger the UE to transmit the non-periodic SRSs through the downlink control signaling, and the method needs a larger overhead.

The above time-frequency configurations of the non-periodic SRS include configurations related to time domain and configurations related to frequency domain; wherein,
the configurations related to time domain are used to make the UE acquire a time domain position transmitting the non-periodic SRS, and the UE can be informed in the following ways specifically:
the eNB and UE appoint the subframes for transmitting the non-periodic SRS in advance, and thus, the UE transmits the non-periodic SRS on the subframes appointed in advance after receiving the downlink control signaling; or,
the eNB implicitly informs the UE of the uplink subframes transmitting the non-periodic SRS by a downlink subframe for transmitting the downlink control signaling, and a specific way can be that: if a subframe number of the downlink subframe used by the eNB for transmitting the downlink control signaling is x, the UE can transmit the non-periodic SRS on a corresponding uplink subframe, that is, the non-periodic SRS is transmitted on the uplink subframe of which the subframe number is x; or, the UE determines the uplink subframes transmitting the non-periodic SRS after calculating according to the subframe number and a subframe offset A of the downlink subframe for the eNB transmitting the downlink control signaling, the subframe offset A can be configured to the UE in advance through the signaling or appointed with the UE in advance, and in a word, the UE needs to acquire the offset A in advance. For example, if the UE and eNB appoint the subframe offset as 2, the eNB transmitting the downlink control signaling on a subframe x (=5) in a downlink radio frame m, and the UE calculates that the uplink subframe transmitting the non-periodic SRS is 5+2=7 after receiving the downlink control signaling, the UE transmits the non-periodic SRS on a subframe y (=7) in an uplink radio frame n (n=m), $0<=A<=320$, $A=(10*n+y)-(10*m+x)$. Certainly, in other examples, the eNB also can inform the UE of the uplink subframe transmitting the non-periodic SRS explicitly and directly through the signaling.

The first subframe in the uplink subframes is: a subframe appointed by the eNB and UE in advance, or a subframe implicitly informed by the eNB to the UE through the downlink subframe transmitting the downlink control signaling, or a subframe informed by the eNB to the UE directly through the downlink control signaling. When the number of the uplink subframes is more than one, the rest uplink subframes are subframes appointed by the eNB and UE in advance or subframes informed by the eNB to the UE through the downlink control signaling.

Furthermore, the UE preferably performs transmission on the last SC-FDMA symbol of the determined subframes.

Preferably, the eNB controls the UE to transmit the non-periodic SRS in a subframe scope of the periodic SRS, that is, the eNB triggers the UE to transmit the non-periodic SRS within the subframe scope, therefore, conflict between the non-periodic SRS and PUCCH can be avoided. The subframe scope of the periodic SRS refers to a subframe scope specified by a cell-specific period and subframe offset of the periodic SRS.

The configurations related to frequency domain are used to make the UE acquire a frequency domain position for transmitting the non-periodic SRS, including: a frequency domain bandwidth and a frequency domain initial position for transmitting the non-periodic SRS. Wherein:

when the eNB triggers the UE to transmit the non-periodic SRS on one uplink subframe, the frequency domain position at which the UE transmitting the non-periodic SRS is decided by the configurations related to frequency domain, and the configurations related to frequency domain are appointed by the eNB and UE, or the eNB transmits part or all of the configurations related to frequency domain to the UE through the downlink control signaling.

When the eNB triggers the UE to transmit the non-periodic SRS on multiple uplink subframes, the frequency domain position at which the UE transmitting the non-periodic SRS is decided by the configurations related to the frequency domain, and all the configurations related to frequency domain are appointed by the eNB and UE, or the eNB transmits the configurations related to frequency domain of all the uplink subframes to the UE through the downlink control signaling, or the eNB and UE appoint the configurations of a part of the uplink subframes, and the configurations of another part of the uplink subframes are sent to the UE through the downlink control signaling.

The frequency domain bandwidth of the non-periodic SRS can be the same as or different from the frequency domain bandwidth of the periodic SRS sent by the UE (e.g. the former is an integral multiple of the latter).

The frequency domain initial position of the non-periodic SRS on the first subframe in the uplink subframes is the same as the frequency domain initial position for the UE transmitting the periodic SRS on a certain subframe n. Preferably, the subframe n is a transmission subframe of the first periodic SRS after the transmission subframe of the non-periodic SRS, that is, the frequency domain initial position of the non-periodic SRS on the first subframe in the uplink subframes is the same as the frequency domain initial position of a next periodic SRS to be sent; or the subframe n is a transmission subframe of the periodic SRS prior to the transmission subframe of the non-periodic SRS, that is, the frequency domain initial position of the non-periodic SRS on the first subframe in the downlink subframes is the same as the frequency domain initial position of a previously sent periodic SRS. When the eNB triggers the UE to transmit the non-periodic SRS on multiple uplink subframes, except the first uplink subframe in the uplink subframes, the frequency domain initial position of the non-periodic SRS in the rest uplink subframes is the same as the frequency domain initial position of the non-periodic SRS on the first uplink subframe, or is obtained through calculation according to a frequency hopping rule of the periodic SRS.

When the frequency domain initial position of the non-periodic SRS is the same as the frequency domain initial position of the next periodic SRS to be sent, the frequency domain initial position of the next periodic SRS to be sent can be unchanged, that is, the frequency domain initial position of the periodic SRS after the non-periodic SRS is not influenced by the non-periodic SRS, or is changed according to the frequency domain position of the non-periodic SRS. Specifically, if the non-periodic SRS is configured to be sent on only one uplink subframe, the UE takes the frequency domain position of the non-periodic SRS on the first uplink subframe in the uplink subframes as a start, and in combination with the frequency hopping rule of the periodic SRS, recalculates frequency domain initial positions of transmission moments of each periodic SRS. If multiple uplink subframes are configured to transmit the periodic SRS, the UE takes the frequency domain position of the non-periodic SRS on the first uplink subframe in the uplink subframes as a start, and in combination with the frequency hopping rule of the periodic SRS, calculates the frequency domain initial positions of each periodic SRS and/or non-periodic SRSs triggered by the same downlink control signaling subsequently.

With regard to the UE, before transmitting the non-periodic SRS, if judging that there are periodic SRSs on the subframes triggered to transmit the non-periodic SRS by the eNB required to be sent, the UE selects to transmit the periodic SRS and/or non-periodic SRS. When the UE transmits the periodic SRS and non-periodic SRS simultaneously, a frequency division mode can be used to perform transmission, that is, the periodic SRS is transmitted on one frequency band and the non-periodic SRS is transmitted on another frequency band.

In order to avoid conflict with the periodic SRSs of other UEs, the eNB also can reserve the non-periodic SRS resources for one or multiple UEs, the reserved non-periodic SRS resources can be shared by multiple UE. The reserved non-periodic SRS resources are only used for the UE transmitting the non-periodic SRS, and the eNB pre-configures (through an appointment or signaling configuration) one or multiple kinds of the following resources as the reserved non-periodic SRS resources: code resources, frequency domain resources and time domain resources.

The eNB makes the UE acquire the reserved code resource by configuring an SRS root sequence and/or a sequence cycle shift. The eNB makes the UE acquire the reserved frequency domain resources by configuring Comb information and/or frequency band information, wherein, the frequency band information includes a frequency domain starting point and bandwidth. The eNB makes the UE acquire the reserved time domain resources by configuring the subframes for transmitting the non-periodic SRS.

Preferably, the eNB indicates the resources reserved for one or multiple UEs and used for the non-periodic SRS through a Radio Resource Control (RRC) layer signaling, that is, configures the UE with the reserved resources through the RRC layer signaling.

The downlink control signaling is a physical layer signaling preferably, and when the eNB triggers the non-periodic SRS through the physical layer signaling, the UE uses the 7 non-periodic SRS resources to transmit the non-periodic SRS. Preferably, the physical layer signaling is a signaling in the PDCCH.

The appointment in the present invention includes a condition when the configuration is directly appointed between the eNB and UE, and a condition when the configuration is known through calculation with appointed parameters and rules.

A configuration system for implementing the above method includes an eNB and a UE, wherein:

the eNB is configured to: trigger one or multiple UEs to transmit an aperiodic SRS on one or multiple uplink subframes through a downlink control signaling;

the UE is configured to: after receiving the downlink control signaling sent by the eNB, use non-periodic SRS resources to transmit the non-periodic SRS on the uplink subframes according to the triggering of the eNB.

Furthermore, both the eNB and UE have a configuration module, configured to: save configurations appointed by the two parties or acquired through a certain mechanism, and also have a transmission module and a receiving module, configured to: complete interactions between the eNB and UE.

The present invention will be described in detail in combination with the examples below. It should be noted that the examples in the present invention and the technical characteristics in the examples can be optionally combined with each other in the condition of no conflict.

Example 1

An FDD system is taken as an example, a cell-specific period and subframe offset of a periodic SRS are configured as 7 (i.e. the configuration 7 in Table 5). If a UE specific SRS period and subframe offset of UE1 are configured as 7, a transmission moment of the periodic SRS is shown as the position "▨" in FIG. 7.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on the subframe 5 of the uplink radio frame m, namely, a time domain position "▮" shown in the figure. The non-periodic SRS has no influence on the periodic SRS to be sent subsequently.

A time-frequency configuration of the pre-configured non-periodic SRS resources includes that:
a bandwidth of the non-periodic SRS is the same as a bandwidth of the periodic SRS, and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is unchanged. Subframes for transmitting the non-periodic SRS belong to a subframe scope in which a cell may transmit the periodic SRS.

Example 2

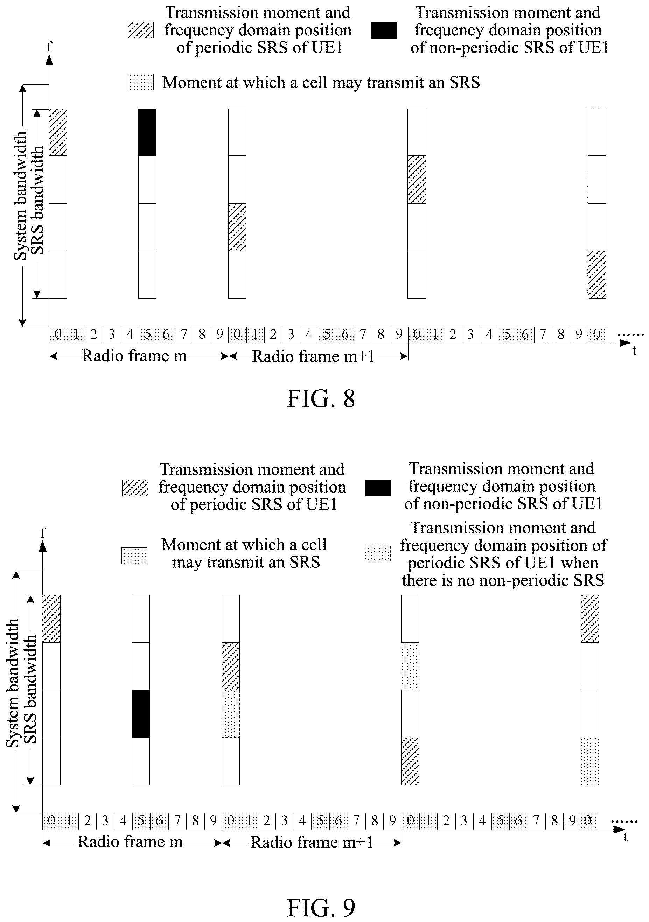

An FDD system is taken as an example, a cell-specific period and subframe offset of a periodic SRS are configured as 7 (i.e. the configuration 7 in Table 5). If a UE specific SRS period and subframe offset of a UE1 are configured as 7, a transmission moment of the periodic SRS is shown as the position "▨" in FIG. 8.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 5 of an uplink radio frame m, namely, a time domain position "▮" shown in the figure. The non-periodic SRS has no influence on the periodic SRS to be sent subsequently.

A time-frequency configuration of the pre-configured non-periodic SRS resources includes that:
a bandwidth of the non-periodic SRS is the same as a bandwidth of the periodic SRS, and a frequency domain initial position of the non-periodic SRS is the same as a frequency domain initial position of a previously sent periodic SRS, that is, the same as the frequency domain initial position of the periodic SRS on a subframe 0 of a radio frame m, and after there is the non-periodic SRS, the frequency domain initial position of the periodic SRS on the subframe 0 of the radio frame m is unchanged. Subframes for transmitting the non-periodic SRS belong to a subframe scope in which a cell may transmit the periodic SRS.

Example 3

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 9.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 5 of an uplink radio frame m, namely, a time domain position "█" shown in the figure.

A frequency domain position of the periodic SRS to be sent after the non-periodic SRS is changed due to the transmission of the non-periodic SRS. After the periodic SRS which should be transmitted at the position shown as "▯"

is recalculated by the UE, an actual transmission position is with reference to "▨".

A time-frequency configuration of the pre-configured non-periodic SRS resources includes that:
a bandwidth of the non-periodic SRS is the same as a bandwidth of the periodic SRS, and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is the same as the frequency domain initial position of the next periodic SRS, that is, the same as the frequency domain initial position of the periodic SRS on a radio frame m+2, and so on. Subframes for transmitting the non-periodic SRS belong to a subframe scope in which a cell may transmit the periodic SRS.

Example 4

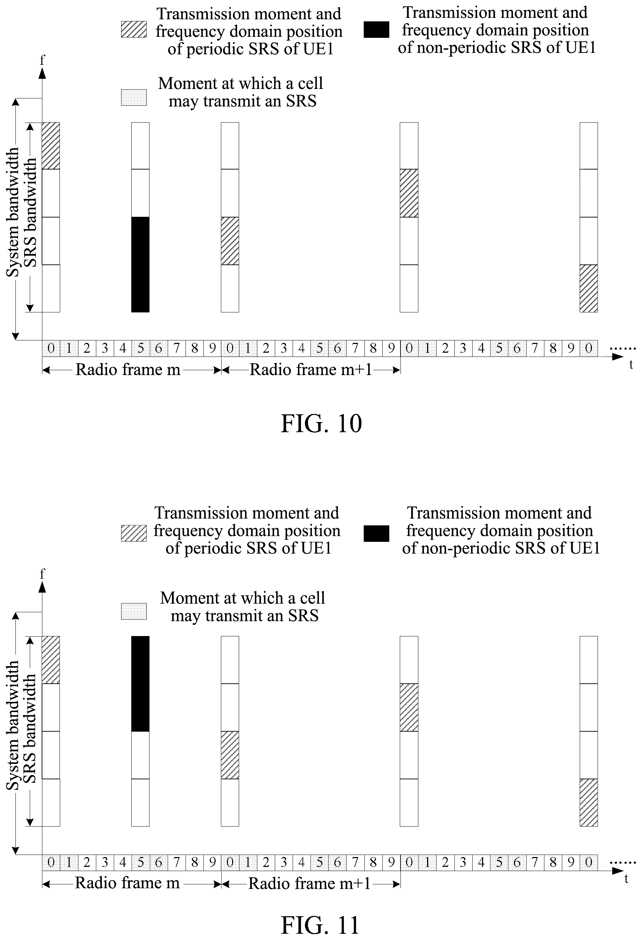

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 10.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 5 of an uplink radio frame m, namely, a time domain position "█" shown in the figure. The non-periodic SRS has no influence on the periodic SRS to be sent subsequently.

A time-frequency configuration of the pre-configured non-periodic SRS resources includes that:
a bandwidth of the non-periodic SRS is different from a bandwidth of the periodic SRS (the bandwidth of the non-periodic SRS is twice the bandwidth of the periodic SRS in the example), and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is unchanged. Subframes for transmitting the non-periodic SRS belong to a subframe scope in which a cell may transmit the periodic SRS.

Example 5

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 11.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 5 of an uplink radio frame m, namely, a time domain position "▮" shown in the figure. The non-periodic SRS has no influence on the periodic SRS to be sent subsequently.

A time-frequency configuration of the pre-configured non-periodic SRS resources includes that: a bandwidth of the non-periodic SRS is different from a bandwidth of the periodic SRS (the bandwidth of the non-periodic SRS is twice the bandwidth of the periodic SRS in the example), and a frequency domain initial position of the non-periodic SRS is the same as a frequency domain initial position of a prev sent periodic SRS, that is, the same as the frequency domain initial position of the periodic SRS on a subframe 0 of a radio frame m, and after there is the non-periodic SRS, the frequency domain initial position of the periodic SRS on the subframe 0 of the radio frame m is unchanged. Subframes for transmitting the non-periodic SRS belong to a subframe scope in which a cell may transmit the periodic SRS.

Example 6

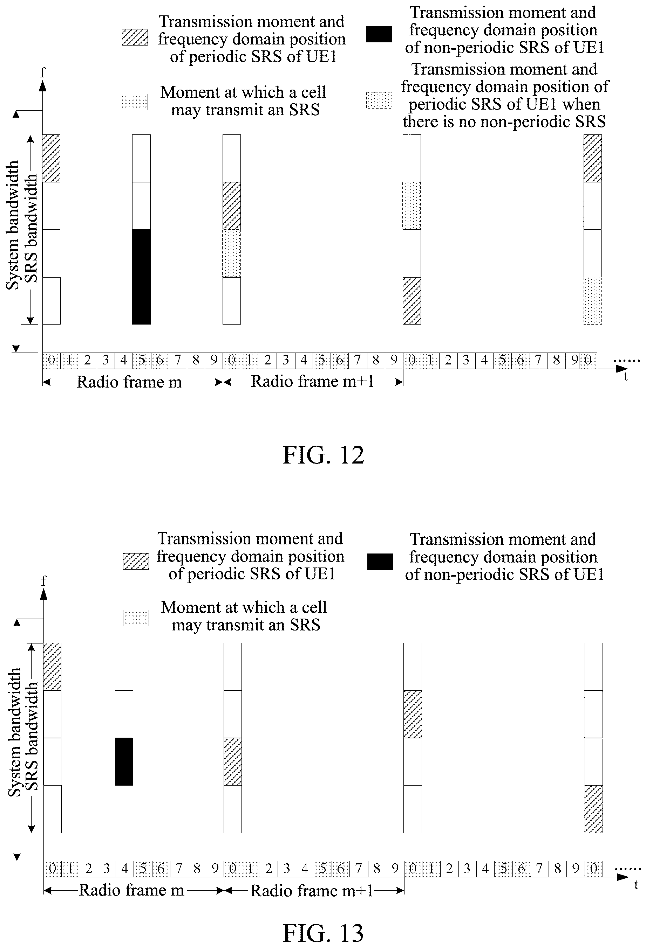

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 12.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 5 of an uplink radio frame m, namely, a time domain position "▮" shown in the figure.

A frequency domain position of the periodic SRS to be sent after the non-periodic SRS is changed due to the transmission of the non-periodic SRS. The actual transmission position of the periodic SRS which should be transmitted at the position shown as "▤" is recalculated by the UE and is with reference to "▨", and a frequency domain bandwidth of the periodic SRS is unchanged.

A time-frequency configuration of the pre-configured non-periodic SRS resources includes that: a bandwidth of the non-periodic SRS is different from a bandwidth of the periodic SRS (the bandwidth of the non-periodic SRS is twice the bandwidth of the periodic SRS in the example), and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is the same as the frequency domain initial position of the next periodic SRS, that is, the same as the frequency domain initial position of the periodic SRS on a radio frame m+2, and so on. Subframes for transmitting the non-periodic SRS belong to a subframe scope in which a cell may transmit the periodic SRS.

Example 7

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 13.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 4 of an uplink radio frame m, namely, a time domain position "▮" shown in the figure. The non-periodic SRS has no influence on the periodic SRS to be sent subsequently.

A time-frequency configuration of the pre-configured non-periodic SRS resources includes that: a bandwidth of the non-periodic SRS is the same as a bandwidth of the periodic SRS, and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is unchanged. Subframes for transmitting the non-periodic SRS do not belong to a subframe scope in which a cell may transmit the periodic SRS.

Example 8

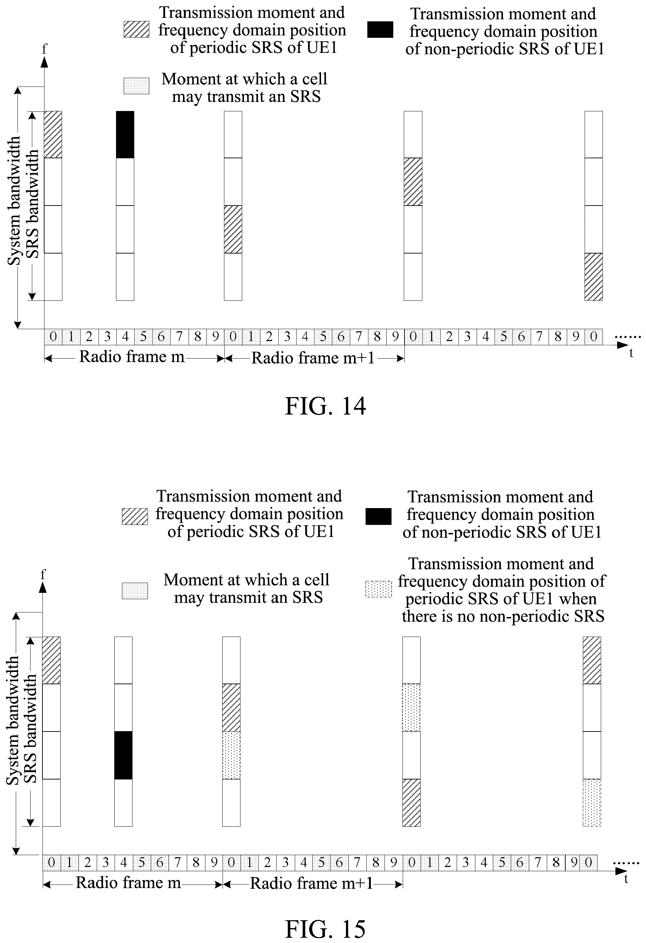

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 14.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 4 of an uplink radio frame m, namely, a time domain position "█" shown in the figure. The non-periodic SRS has no influence on the periodic SRS to be sent subsequently.

A time-frequency configuration of the pre-configured non-periodic SRS resources includes that: a bandwidth of the non-periodic SRS is the same as a bandwidth of the periodic SRS, and a frequency domain initial position of the non-periodic SRS is the same as a frequency domain initial position of a previously sent periodic SRS, that is, the same as the frequency domain initial position of the periodic SRS on a subframe 0 of a radio frame m, and after there is the non-periodic SRS, the frequency domain initial position of the periodic SRS on the subframe 0 of the radio frame m is unchanged. Subframes for transmitting the non-periodic SRS do not belong to a subframe scope in which a cell may transmit the periodic SRS.

Example 9

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 15.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 4 of an uplink radio frame m, namely, a time domain position "█" shown in the figure.

A frequency domain position of the periodic SRS to be sent after the non-periodic SRS is changed due to the transmission of the non-periodic SRS. After the periodic SRS which should be transmitted at the position shown as "▢" is recalculated by the UE, an actual transmission position is with reference to "▨".

A time-frequency configuration of the pre-configured non-periodic SRS resources includes that: a bandwidth of the non-periodic SRS is the same as a bandwidth of the periodic SRS, and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is the same as the frequency domain initial position of the next periodic SRS, that is, the same as the frequency domain initial position of the periodic SRS on a radio frame m+2, and so on. Subframes for transmitting the non-periodic SRS do not belong to a subframe scope in which a cell may transmit the periodic SRS.

Example 10

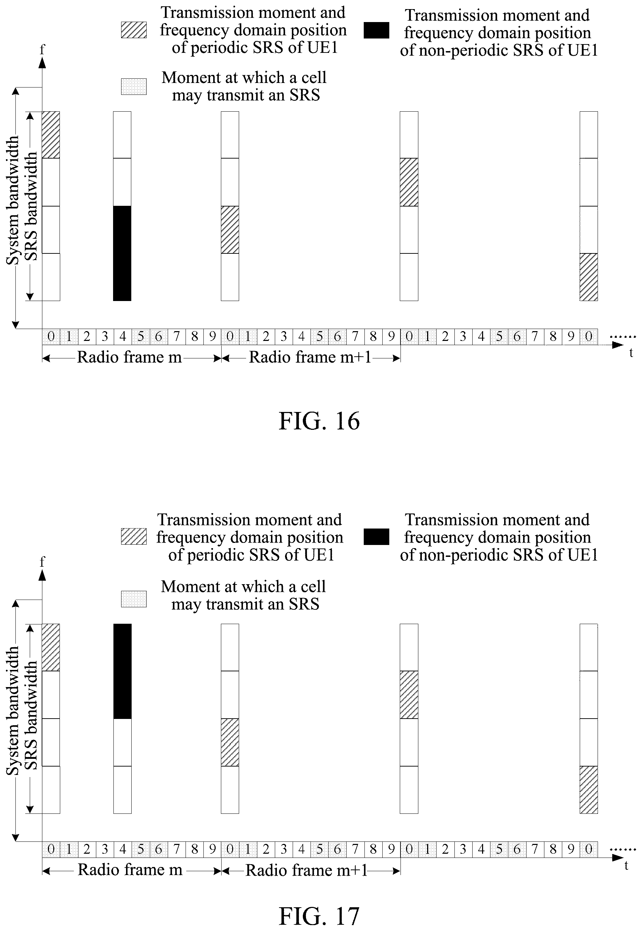

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 16.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 4 of an uplink radio frame m, namely, a time domain position "▮" shown in the figure. The non-periodic SRS has no influence on the periodic SRS to be sent subsequently.

A time-frequency configuration of the pre-configured non-periodic SRS resources includes that:
a bandwidth of the non-periodic SRS is different from a bandwidth of the periodic SRS (the bandwidth of the non-periodic SRS is twice the bandwidth of the periodic SRS in the example), and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is unchanged. Subframes for transmitting the non-periodic SRS do not belong to a subframe scope in which a cell may transmit the periodic SRS.

Example 11

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 17.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 4 of an uplink radio frame m, namely, a time domain position "▮" shown in the figure. The non-periodic SRS has no influence on the periodic SRS to be sent subsequently.

A time-frequency configuration of the pre-configured non-periodic SRS resources includes that:
a bandwidth of the non-periodic SRS is different from a bandwidth of the periodic SRS (the bandwidth of the non-periodic SRS is twice the bandwidth of the periodic SRS in the example), and a frequency domain initial position of the non-periodic SRS is the same as a frequency domain initial position of a prev sent periodic SRS, that is, the same as the frequency domain initial position of the periodic SRS on a subframe 0 of a radio frame m, and after there is the non-periodic SRS, the frequency domain initial position of the periodic SRS on the subframe 0 of the radio frame m is unchanged. Subframes for transmitting the non-periodic SRS do not belong to a subframe scope in which a cell may transmit the periodic SRS.

Example 12

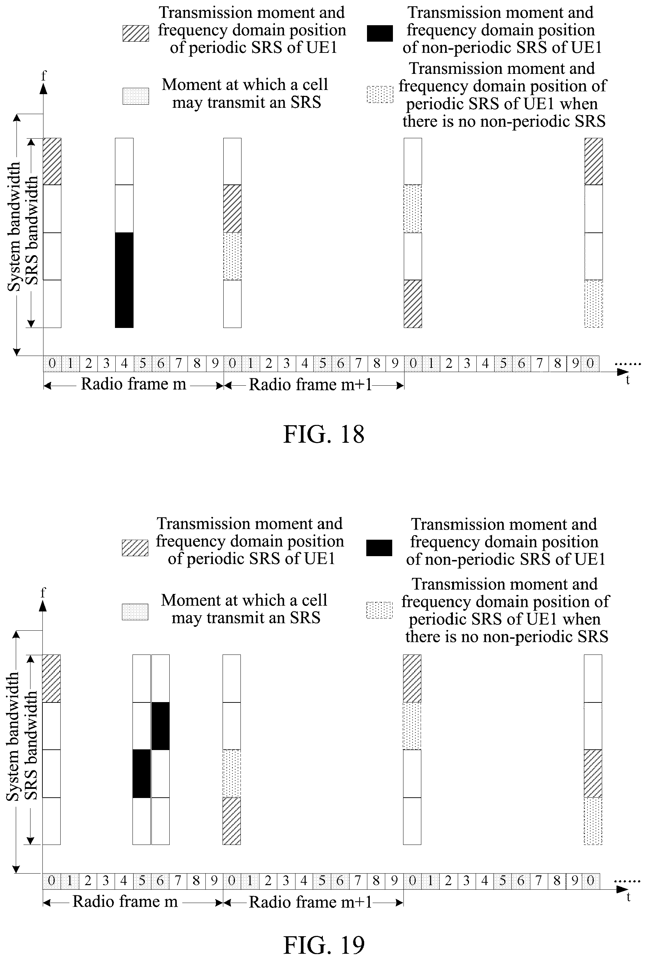

An FDD system is taken as an example, a cell-specific period and subframe offset of a periodic SRS are configured as 7 (i.e. a configuration 7 in Table 5). If a UE specific SRS period and subframe offset of a UE1 are configured as 7, a transmission moment of the periodic SRS is shown as the position "▨" in FIG. 18.

On a subframe 1 of a downlink radio frame m (a subframe number in all radio subframes is x=10*m+1), an eNB uses a downlink control signaling to trigger an aperiodic SRS on one uplink subframe; after receiving the downlink control signaling, a UE uses the pre-configured non-periodic SRS resources to transmit the non-periodic SRS on a subframe 4 of an uplink radio frame m, namely, a time domain position "▮" shown in the figure.

A frequency domain position of the periodic SRS to be sent after the non-periodic SRS is changed due to the transmission of the non-periodic SRS. After the periodic SRS which should be transmitted at the position shown as "▯" is recalculated by the UE, an actual transmission position is with reference to "▨", and a frequency domain bandwidth of the periodic SRS is unchanged.

A time-frequency configuration of the pre-configured non-periodic SRS resources includes that:
a bandwidth of the non-periodic SRS is different from a bandwidth of the periodic SRS (the bandwidth of the non-periodic SRS is twice the bandwidth of the periodic SRS in the example), and a frequency domain initial position of the non-periodic SRS is the same as a frequency domain initial position of a next periodic SRS to be sent, that is, the same as the frequency domain initial position of the periodic SRS on a subframe 0 of a radio frame m+1, and after there is the non-periodic SRS, the frequency domain initial position of the periodic SRS on the subframe 0 of the radio frame m+1 is the same as the frequency domain initial position of the next periodic SRS, that is, the same as the frequency domain initial position of the periodic SRS on a radio frame m+2, and so on. Subframes for transmitting the non-periodic SRS do not belong to a subframe scope in which a cell may transmit the periodic SRS.

When the eNB triggers multiple (e.g. two) non-periodic SRSs through the downlink control signaling, the frequency domain initial positions of the second non-periodic SRS and the subsequent periodic SRS can be obtained based on the period frequency hopping rule with reference to FIG. 19 and FIG. 20 respectively.

The example also provides an eNB in a Long Term Evolution Advanced (LTE-A) system, and the eNB includes: a transmission module, configured to: trigger one or multiple User Equipment (UE) to transmit an aperiodic Sounding Reference Signal (SRS) on one or multiple uplink subframes through a downlink control signaling, so as to make the UE use non-periodic SRS resources to transmit the non-periodic SRS on the uplink subframes according to the triggering of the eNB after receiving the downlink control signaling sent by the eNB.

The example also provides user equipment in a Long Term Evolution Advanced (LTE-A) system, and the user equipment includes:

a receiving module, configured to: receive a downlink control signaling, used for triggering the user equipment to transmit an aperiodic Sounding Reference Signal (SRS) on one or multiple uplink subframes, of an eNB; and

a transmission module, configured to: after receiving the downlink control signaling sent by the eNB, use non-periodic SRS resources to transmit the non-periodic SRS on the uplink subframes according to the triggering of the eNB.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present invention is not limited to any combination of hardware and software in a specific form.

The above description is only the preferred examples of the present invention, which is not used to limit the present invention. The present invention can have various modifications and changes for the skilled in the art. All the modifications and improvements, etc. made within the principle of the present invention shall fall into the protection scope of the present invention as defined in the claims.

Industrial Applicability

With the configuration method and system for the non-periodic SRS provided by the present invention, the resources used by the non-periodic SRS can be determined, channel measurement frequency of the UE can be enhanced, and channel measurement requirement of the LTE-A system can be better satisfied. In addition, by reserving non-periodic SRS resources, influence and conflict between the periodic SRS and non-periodic SRS in the LTE-A system can be avoided effectively.

**Claims**

1.  A configuration method for a sounding reference signal in a Long Term Evolution Advanced, LTE-A, system, comprising:

    an eNB triggering one or multiple User Equipment, UE, to transmit an aperiodic Sounding Reference Signal, SRS, on one or multiple uplink subframes through a downlink control signaling,
    after receiving the downlink control signaling sent by the eNB, the UE using aperiodic SRS resources to transmit the aperiodic SRS on the uplink subframes according to the triggering of the eNB,
    **characterized in that** the frequency domain initial position of the aperiodic SRS on a first subframe in the uplink subframes is the same as the frequency domain initial position of a next periodic SRS to be sent, or the frequency domain initial position of the aperiodic SRS on the first subframe in the uplink subframes is the same as the frequency domain initial position of the periodic SRS prior to a transmission subframe of the aperiodic SRS; when the eNB triggers the UE to transmit the aperiodic SRS on multiple uplink subframes, for the rest of the uplink subframes except the first subframe in the uplink subframes, the frequency domain initial position of the aperiodic SRS on the rest of the uplink subframes is the same as the frequency domain initial position of the aperiodic SRS on the first subframe, or the frequency domain initial position of the aperiodic SRS in the rest of the uplink subframes is obtained through calculation according to a frequency hopping rule of the periodic SRS, the first subframe in the uplink subframes is: a subframe predetermined by the eNB and UE in advance, or a subframe informed by the eNB implicitly to the UE through a downlink subframe transmitting the downlink control signaling, or a subframe informed by the eNB to the UE through the downlink control signaling.

2. The method according to claim 1, wherein, the number of the uplink subframes is informed by the eNB to the UE through an upper layer signaling or a physical layer signaling, or the number of the uplink subframes is predetermined by the eNB and UE.

3. The method according to claim 1, wherein,
when the number of the uplink subframes is more than one, the rest of the uplink sub frames except the first sub frame in the uplink subframes are: subframes predetermined by the eNB and UE in advance, or subframes informed by the eNB to the UE through the downlink control signaling;
the eNB informing the UE of the first subframe in the uplink subframes implicitly through the downlink subframe transmitting the downlink control signaling means:
the UE acquiring an offset A in advance, and if it is assumed that the eNB transmits the downlink control signaling on a downlink subframe x in a downlink radio frame m, the UE transmitting the aperiodic SRS of the first subframe on a uplink subframe y in an corresponding uplink radio subframe n, wherein 0<=A<=320.

4. The method according to claim 1, wherein,
the uplink subframes belong to a subframe scope specified by a cell specific period and subframe offset of a periodic SRS.

5. The method according to claim 1, wherein,
the UE transmits the aperiodic SRS on a last Single Carrier Frequency-Division Multiple Access, SC-FDMA, symbol of the uplink subframes.

6. The method according to claim 1, wherein,
when the eNB triggers the UE to transmit the aperiodic SRS on one uplink subframe, the frequency domain position at which the UE transmits the aperiodic SRS is decided by configurations related to a frequency domain; the configurations related to the frequency domain are predetermined by the eNB and the UE, or the eNB transmits part or all of the configurations related to the frequency domain to the UE through the downlink control signaling; and the configurations related to the frequency domain include a frequency domain bandwidth and a frequency domain initial position for transmitting the aperiodic SRS;
when the eNB triggers the UE to transmit the aperiodic SRS on multiple uplink subframes, the frequency domain position at which the UE transmits the aperiodic SRS is decided by the configurations related to the frequency domain; all the configurations related to the frequency domain are predetermined by the eNB and the UE, or the eNB transmits the configurations related to the frequency domain of all the uplink subframes to the UE through the downlink control signaling, or the eNB and UE predetermine the configurations of a part of the uplink subframes and the configurations of another part of the uplink subframes are sent to the UE through the downlink control signaling; and the configurations related to the frequency domain include the frequency domain bandwidth and frequency domain initial position for transmitting the aperiodic SRS;
a bandwidth of the aperiodic SRS is the same as a bandwidth for the UE transmitting the periodic SRS.

7. The method according to claim 1, wherein,
the frequency domain initial position of the periodic SRS after the aperiodic SRS is not influenced by the aperiodic SRS, or
the UE takes the frequency domain position of the aperiodic SRS on the first subframe in the uplink subframes as a start, and in combination with the frequency hopping rule of the periodic SRS, calculates frequency domain initial positions of each periodic SRS or aperiodic SRSs triggered by the same downlink control signaling subsequently.

8. The method according to claim 1, wherein,
before the step of the UE transmitting the aperiodic SRS, the method further comprises: if the UE judges that there are still periodic SRSs on the uplink subframes required to be sent, the UE selecting to transmit: the periodic SRS or aperiodic SRS.

9. The method according to claim 1, wherein,
the eNB reserves resources for the aperiodic SRS, one reserved resource is used by one or multiple UEs, and the eNB pre-configures one or multiple kinds of the following resources as the reserved aperiodic SRS resources: code resources, frequency domain resources and time domain resources;
the eNB makes the UE acquire the reserved code resources by configuring an SRS root sequence or a sequence cycle shift; the eNB makes the UE acquire the reserved frequency domain resources by configuring Comb information or frequency band information, wherein, the frequency band information includes a frequency domain starting point and bandwidth; and the eNB makes the UE acquire the reserved time domain resources by configuring the sub frames for transmitting the aperiodic SRS;

the eNB indicates the reserved resources used for the aperiodic SRS transmission through a radio resource control layer signaling.

10. The method according to claim 1, wherein,
the downlink control signaling is a physical layer signaling; and the physical layer signaling is a signaling in a physical downlink control channel.

11. A Long Term Evolution Advanced, LTE-A, system, comprising an eNB and one or multiple User Equipment, UE, wherein,
the eNB comprises a transmission module which is configured to: trigger one or multiple UE to transmit an aperiodic Sounding Reference Signal, SRS, on one or multiple uplink subframes through a downlink control signaling, so as to make the UE use aperiodic SRS resources to transmit the aperiodic SRS on the uplink subframes according to the triggering of the eNB after receiving the downlink control signaling sent by the eNB,
**characterized in that**, the frequency domain initial position of the aperiodic SRS on the first subframe in the uplink subframes is the same as the frequency domain initial position of a next periodic SRS to be sent, or the frequency domain initial position of the aperiodic SRS on the first subframe in the uplink subframes is the same as the frequency domain initial position of the periodic SRS prior to a transmission subframe of the aperiodic SRS;
when the eNB triggers the UE to transmit the aperiodic SRS on multiple uplink subframes, for the rest of the uplink subframes except first subframe in the uplink subframes, the frequency domain initial position of the aperiodic SRS on the rest of the uplink subframes is the same as the frequency domain initial position of the aperiodic SRS on the first subframe, or the frequency domain initial position of the aperiodic SRS in the rest of the uplink subframes is obtained through calculation according to a frequency hopping rule of the periodic SRS,
the first subframe in the uplink subframes is: a subframe predetermined by the eNB and UE in advance, or a subframe informed by the eNB implicitly to the UE through a downlink subframe transmitting the downlink control signaling, or a subframe informed by the eNB to the UE through the downlink control signaling.

12. User equipment in a Long Term Evolution Advanced, LTE-A, system, comprising:

a receiving module, configured to: receive a downlink control signaling, used for triggering the user equipment to transmit an aperiodic Sounding Reference Signal, SRS, on one or multiple uplink subframes, to an eNB; and
a transmission module, configured to: after receiving the downlink control signaling sent by the eNB, use aperiodic SRS resources to transmit the aperiodic SRS on the uplink subframes according to the triggering of the eNB,
**characterized in that**, the frequency domain initial position of the aperiodic SRS on the first subframe in the uplink subframes is the same as the frequency domain initial position of a next periodic SRS to be sent, or the frequency domain initial position of the aperiodic SRS on the first subframe in the uplink subframes is the same as the frequency domain initial position of the periodic SRS prior to a transmission subframe of the aperiodic SRS;
when the eNB triggers the UE to transmit the aperiodic SRS on multiple uplink subframes, for the rest of the uplink subframes except first subframe in the uplink subframes, the frequency domain initial position of the aperiodic SRS on the rest of the uplink subframes is the same as the frequency domain initial position of the aperiodic SRS on the first subframe, or the frequency domain initial position of the aperiodic SRS in the rest of the uplink subframes is obtained through calculation according to a frequency hopping rule of the periodic SRS,
the first subframe in the uplink subframes is: a subframe predetermined by the eNB and UE in advance, or a subframe informed by the eNB implicitly to the UE through a downlink subframe transmitting the downlink control signaling, or a subframe informed by the eNB to the UE through the downlink control signaling.

**Patentansprüche**

1. Konfigurationsverfahren für ein Tonreferenzsignal in einem Long-Term-Evolution-Advanced-(LTE-A-)System, das Folgendes umfasst:

einen eNB, der eine oder mehrere Benutzereinrichtungen (user equipment - UE) dazu auslöst, ein aperiodisches Tonreferenzsignal (sounding reference signal - SRS) auf einem oder mehreren Uplink-Subframes durch eine Downlink-Steuersignalisierung zu übertragen,

wobei, nach Empfangen der Downlink-Steuersignalisierung, die durch den eNB gesendet ist, die UE aperiodische SRS-Ressourcen verwendet, um das aperiodische SRS auf den Uplink-Subframes gemäß dem Auslösen des eNB zu übertragen,

**dadurch gekennzeichnet, dass** die Frequenzdomänenanfangsposition des aperiodischen SRS auf einem ersten Subframe in den Uplink-Subframes dieselbe ist wie die Frequenzdomänenanfangsposition eines nächsten periodischen SRS, das gesendet werden soll, oder die Frequenzdomänenanfangsposition des aperiodischen SRS auf dem ersten Subframe in den Uplink-Subframes dieselbe ist wie die Frequenzdomänenanfangsposition des periodischen SRS vor einem Übertragungs-Subframe des aperiodischen SRS;

wenn der eNB die UE dazu auslöst, das aperiodische SRS auf mehreren Uplink-Subframes für den Rest der Uplink-Subframes außer dem ersten Subframe in den Uplink-Subframes zu übertragen, ist die Frequenzdomänenanfangsposition des aperiodischen SRS auf dem Rest der Uplink-Subframes dieselbe wie die Frequenzdomänenanfangsposition des aperiodischen SRS auf dem ersten Subframe, oder die Frequenzdomänenanfangsposition des aperiodischen SRS in dem Rest der Uplink-Subframes ist durch Berechnen gemäß einer Frequenzsprungregel des periodischen SRS erlangt,

wobei der erste Subframe in den Uplink-Subframes Folgendes ist: ein Subframe, der durch den eNB und die UE im Vorfeld vorbestimmt ist, oder ein Subframe, der durch den eNB implizit an die UE durch einen Downlink-Subframe, der die Downlink-Steuersignalisierung überträgt, informiert ist, oder ein Subframe, der durch den eNB durch die Downlink-Steuersignalisierung an das UE informiert ist.

2. Verfahren nach Anspruch 1, wobei
die Anzahl von Uplink-Subframes durch den eNB an die UE durch eine Signalisierung höherer Schicht oder eine Signalisierung physischer Schicht informiert ist oder die Anzahl der Uplink-Subframes durch den eNB und die UE vorbestimmt ist.

3. Verfahren nach Anspruch 1, wobei
wenn die Anzahl der Uplink-Subframes mehr als eins ist, der Rest der Uplink-Subframes außer dem ersten Subframe in dem Uplink-Subframe Folgende sind: Subframes, die durch den eNB und die UE im Vorfeld vorbestimmt sind, oder Subframes, die durch den eNB an die UE über die Downlink-Steuersignalisierung informiert sind;

wobei Informieren der UE durch den eNB über den ersten Subframe in den Uplink-Subframes implizit durch Übertragen der Downlink-Steuersignalisierung durch den Downlink-Subframe Folgendes bedeutet:

die UE erlangt einen Versatz A im Vorfeld und falls angenommen wird, dass der eNB die Downlink-Steuersignalisierung an einen Downlink-Subframe x in einem Downlink-Funk-Frame m überträgt, überträgt die UE das aperiodische SRS des ersten Subframes auf einem Uplink-Subframe y in einem entsprechenden Uplink-Funk-Subframe n, wobei 0<=A<=320.

4. Verfahren nach Anspruch 1, wobei
die Uplink-Subframes zu einem Subframe-Umfang gehören, der durch eine(n) zellspezifische(n) Periode und Subframeversatz eines periodischen SRS bestimmt ist.

5. Verfahren nach Anspruch 1, wobei
die UE das aperiodische SRS auf einem letzten Single-Carrier-Frequency-Division-Multiple-Access-(SC-FDMA-)Symbol der Uplink-Subframes überträgt.

6. Verfahren nach Anspruch 1, wobei,
wenn der eNB die UE dazu auslöst, das aperiodische SRS auf einem Uplink-Subframe zu übertragen, die Frequenzdomänenposition, bei welcher die UE das aperiodische SRS überträgt, durch Konfigurationen entschieden wird, die eine Frequenzdomäne betreffen; wobei die Konfigurationen, die die Frequenzdomäne betreffen, durch den eNB und die UE vorbestimmt sind, oder der eNB einen Teil oder alle der Konfigurationen, die die Frequenzdomäne betreffen, an die UE durch Downlink-Steuersignalisierung überträgt; und wobei die Konfigurationen, die die Frequenzdomäne betreffen, eine Frequenzdomänenbandbreite und eine Frequenzdomänenanfangsposition zum Übertragen des aperiodischen SRS beinhalten;

wenn der eNB die UE dazu auslöst, das aperiodische SRS auf mehreren Uplink-Subframes zu übertragen, die Frequenzdomänenposition, an welcher die UE das aperiodische SRS überträgt, durch die Konfigurationen entschieden wird, die die Frequenzdomäne betreffen; wobei alle Konfigurationen, die die Frequenzdomäne betreffen, durch den eNB und die UE vorbestimmt sind, oder der eNB die Konfigurationen, die die Frequenzdomäne von allen Uplink-Subframes betreffen, an die UE durch die Downlink-Steuersignalisierung überträgt, oder der eNB und die UE die Konfigurationen eines Teils der Uplink-Subframes vorbestimmen und die Konfigurationen eines anderen Teils des Uplink-Subframes durch Downlink-Steuersignalisierung an die UE gesendet werden; und wobei die Konfigurationen, die die Frequenzdomäne betreffen, die Frequenzdomänenbandbreite und Frequenzdomänenanfangsposition zum Übertragen des aperiodischen SRS beinhalten;

wobei eine Bandbreite des aperiodischen SRS dieselbe ist wie eine Bandbreite für die UE, die das periodische SRS überträgt.

7. Verfahren nach Anspruch 1, wobei

die Frequenzdomänenanfangsposition des periodischen SRS nach dem aperiodischen SRS nicht durch das aperiodische SRS beeinflusst ist, oder

die UE die Frequenzdomänenposition des aperiodischen SRS auf dem ersten Subframe in den Uplink-Subframes als einen Anfang nimmt und in Kombination mit der Frequenzsprungregel des periodischen SRS die Frequenzdomänenanfangspositionen von jedem periodischen SRS oder aperiodischen SRS, die nachfolgend durch dieselbe Downlink-Steuersignalisierung ausgelöst sind, berechnet.

8. Verfahren nach Anspruch 1, wobei

vor dem Schritt des Übertragens des aperiodischen SRS durch die UE, das Verfahren ferner Folgendes umfasst: falls die UE beurteilt, dass weiterhin periodische SRS auf den Uplink-Subframes gesendet werden müssen, die UE Folgendes zum Übertragen auswählt: das periodische SRS oder das aperiodische SRS.

9. Verfahren nach Anspruch 1, wobei

der eNB Ressourcen für das aperiodische SRS reserviert, wobei eine reservierte Ressource durch eine oder mehrere UE verwendet wird, und der eNB eine oder mehrere Arten der folgenden Ressourcen als die reservierten aperiodischen SRS-Ressourcen vorkonfiguriert: Code-Ressourcen, Frequenzdomänenressourcen und Zeitdomänenressourcen;

der eNB die UE dazu veranlasst, die reservierten Code-Ressourcen zu erlangen, durch Konfigurieren einer SRS-Wurzelfolge oder einer Folgenzyklusverschiebung; der eNB die UE dazu veranlasst, die reservierten Frequenzdomänenressourcen zu erlangen, durch Konfigurieren der Kamminformationen oder Frequenzbandinformationen, wobei die Frequenzbandinformationen eine(n) Frequenzdomänenanfangspunkt und -bandbreite beinhalten; und der eNB die UE dazu veranlasst, die reservierten Zeitdomänenressourcen zu erlangen, durch Konfigurieren der Subframes zum Übertragen des aperiodischen SRS;

der eNB die reservierten Ressourcen angibt, die für die aperiodische SRS-Übertragung durch eine Funkressourcen-Steuerschichtsignalisierung verwendet wird.

10. Verfahren nach Anspruch 1, wobei

die Downlink-Steuersignalisierung eine Signalisierung der physischen Schicht ist; und die Signalisierung der physischen Schicht eine Signalisierung in einem physischen Downlink-Steuerkanal ist.

11. Long-Term-Evolution-Advanced-(LTE-A-)System, das einen eNB und eine oder mehrere Benutzereinrichtungen, UE, umfasst, wobei, der eNB ein Übertragungsmodul umfasst, das zu Folgendem konfiguriert ist: eine oder mehrere UE dazu auszulösen, ein aperiodisches Tonreferenzsignal, SRS, auf einem oder mehreren Uplink-Subframes durch eine Downlink-Steuersignalisierung zu übertragen, um die UE dazu zu veranlassen, aperiodische SRS-Ressourcen zu verwenden, um das aperiodische SRS auf den Uplink-Subframes gemäß dem Auslösen des eNB nach Empfangen der Downlink-Steuersignalisierung, die durch den eNB gesendet ist, zu übermitteln,

**dadurch gekennzeichnet, dass** die Frequenzdomänenanfangsposition des aperiodischen SRS auf dem ersten Subframe in den Uplink-Subframes dieselbe ist wie die Frequenzdomänenanfangsposition eines nächsten periodischen SRS, das gesendet werden soll, oder die Frequenzdomänenanfangsposition des aperiodischen SRS auf dem ersten Subframe in den Uplink-Subframes dieselbe ist wie die Frequenzdomänenanfangsposition des periodischen SRS vor einem Übertragungssubframe des aperiodischen SRS;

wenn der eNB die UE dazu auslöst, das aperiodische SRS auf mehreren Uplink-Subframes für den Rest der Uplink-Subframes außer dem ersten Subframe in den Uplink-Subframes zu übertragen, die Frequenzdomänenanfangsposition des aperiodischen SRS auf dem Rest der Uplink-Subframes dieselbe ist wie die Frequenzdomänenanfangsposition des aperiodischen SRS auf dem ersten Subframe, oder die Frequenzdomänenanfangsposition des aperiodischen SRS in dem Rest der Uplink-Subframes durch Berechnen gemäß einer Frequenzsprungregel des periodischen SRS erlangt wird,

wobei der erste Subframe in den Uplink-Subframes Folgendes ist: ein Subframe, der durch den eNB und die UE im Vorfeld vorbestimmt ist, oder ein Subframe, der durch die eNB implizit an die UE über einen Downlink-Subframe, der die Downlink-Steuersignalisierung übermittelt, informiert ist, oder ein Subframe, der durch den eNB an die UE über die Downlink-Steuersignalisierung informiert ist.

**12.** Benutzereinrichtung in einem Long-Term-Evolution-Advanced-(LTE-A-)System, die Folgendes umfasst:

ein Empfangsmodul, das zu Folgendem konfiguriert ist: Empfangen einer Downlink-Steuersignalisierung, die zum Auslösen der Benutzereinrichtung dazu, ein aperiodisches Tonreferenzsignal, SRS, auf einem oder mehreren Uplink-Subframes an einen eNB zu übertragen, verwendet ist; und

ein Übertragungsmodul, das zu Folgendem konfiguriert ist: nach Empfangen der Downlink-Steuersignalisierung, die durch den eNB gesendet ist, Verwenden der aperiodischen SRS-Ressourcen, um das aperiodische SRS auf den Uplink-Subframes gemäß dem Auslösen des eNB zu übertragen,

**dadurch gekennzeichnet, dass** die Frequenzdomänenanfangsposition des aperiodischen SRS auf dem ersten Subframe in den Uplink-Subframes dieselbe ist wie die Frequenzdomänenanfangsposition eines nächsten periodischen SRS, das gesendet werden soll, oder die Frequenzdomänenanfangsposition des aperiodischen SRS auf dem ersten Subframe in den Uplink-Subframes ist dieselbe wie die Frequenzdomänenanfangsposition des periodischen SRS vor einem Übertragungs-Subframe des aperiodischen SRS;

wenn der eNB die UE dazu auslöst, das aperiodische SRS auf mehreren Uplink-Subframes für den Rest der Uplink-Subframes außer dem ersten Subframe in den Uplink-Subframes zu übermitteln, ist die Frequenzdomänenanfangsposition des aperiodischen SRS auf dem Rest der Uplink-Subframes dieselbe wie die Frequenzdomänenanfangsposition des aperiodischen SRS auf dem ersten Subframe, oder ist die Frequenzdomänenanfangsposition des aperiodischen SRS in dem Rest der Uplink-Subframes durch Berechnen gemäß einer Frequenzsprungregel des periodischen SRS erlangt,

wobei der erste Subframe in den Uplink-Subframes Folgendes ist: ein Subframe, der durch den eNB und die UE im Vorfeld vorbestimmt ist, oder ein Subframe, der durch den eNB implizit an die UE durch einen Downlink-Subframe, der die Downlink-Steuersignalisierung überträgt, informiert ist, oder ein Subframe, der durch den eNB an die UE durch die Downlink-Steuersignalisierung informiert ist.

## Revendications

**1.** Procédé de configuration pour un signal de référence de sondage dans un système de type Long Term Evolution-Advanced, LTE-A, comprenant :

le déclenchement, par un eNB, d'un ou de plusieurs équipements utilisateur, UE, pour transmettre un signal de référence de sondage, SRS, apériodique sur une ou plusieurs sous-trames de liaison montante par l'intermédiaire d'une signalisation de commande de liaison descendante,

après la réception de la signalisation de commande de liaison descendante envoyée par l'eNB, l'utilisation par l'UE des ressources de SRS apériodique pour transmettre le SRS apériodique sur les sous-trames de liaison montante en fonction du déclenchement de l'eNB,

**caractérisé en ce que** la position initiale de domaine fréquentiel du SRS apériodique sur une première sous-trame dans les sous-trames de liaison montante est la même que la position initiale de domaine fréquentiel d'un SRS périodique suivant à envoyer, ou la position initiale de domaine fréquentiel du SRS apériodique sur la première sous-trame dans les sous-trames de liaison montante est la même que la position initiale de domaine fréquentiel du SRS périodique avant une sous-trame de transmission du SRS apériodique ;

lorsque l'eNB déclenche l'UE pour transmettre le SRS apériodique sur plusieurs sous-trames de liaison montante, pour le reste des sous-trames de liaison montante à l'exception de la première sous-trame dans les sous-trames de liaison montante, la position initiale de domaine fréquentiel du SRS apériodique sur le reste des sous-trames de liaison montante est la même que la position initiale de domaine fréquentiel du SRS apériodique sur la première sous-trame, ou la position initiale de domaine fréquentiel du SRS apériodique dans le reste des sous-trames de liaison montante est obtenue au moyen d'un calcul selon une règle de saut de fréquence du SRS périodique,

la première sous-trame dans les sous-trames de liaison montante est : une sous-trame prédéterminée à l'avance par l'eNB et l'UE, ou une sous-trame signalée implicitement par l'eNB à l'UE par l'intermédiaire d'une sous-trame de liaison descendante transmettant la signalisation de commande de liaison descendante, ou une sous-trame signalée par l'eNB à l'UE par l'intermédiaire de la signalisation de commande de liaison descendante.

**2.** Procédé selon la revendication 1, dans lequel,

le nombre des sous-trames de liaison montante est signalé par l'eNB à l'UE par l'intermédiaire d'une signalisation de couche supérieure ou d'une signalisation de couche physique, ou le nombre des sous-trames de liaison montante est prédéterminé par l'eNB et l'UE.

**3.** Procédé selon la revendication 1, dans lequel,
lorsque le nombre des sous-trames de liaison montante est supérieur à un, le reste des sous-trames de liaison montante, à l'exception de la première sous-trame dans les sous-trames de liaison montante, sont : des sous-trames prédéterminées à l'avance par l'eNB et l'UE, ou des sous-trames signalées par l'eNB à l'UE par l'intermédiaire de la signalisation de commande de liaison descendante ;
la signalisation implicite par l'eNB à l'UE de la première sous-trame dans les sous-trames de liaison montante par l'intermédiaire de la sous-trame de liaison descendante transmettant la signalisation de commande de liaison descendante signifie que :
l'UE acquiert à l'avance un décalage A, et s'il est supposé que l'eNB transmet la signalisation de commande de liaison descendante sur une sous-trame de liaison descendante x dans une trame radio de liaison descendante m, l'UE transmet le SRS apériodique de la première sous-trame sur une sous-trame de liaison montante y dans une sous-trame radio de liaison montante correspondante n, où 0 <= A <= 320.

**4.** Procédé selon la revendication 1, dans lequel,
les sous-trames de liaison montante appartiennent à une gamme de sous-trames spécifiée par une période spécifique à une cellule et un décalage de sous-trame d'un SRS périodique.

**5.** Procédé selon la revendication 1, dans lequel,
l'UE transmet le SRS apériodique sur un dernier symbole d'accès multiple par répartition en fréquence à porteuse unique, SC-FDMA, des sous-trames de liaison montante.

**6.** Procédé selon la revendication 1, dans lequel,
lorsque l'eNB déclenche l'UE pour transmettre le SRS apériodique sur une sous-trame de liaison montante, la position de domaine fréquentiel à laquelle l'UE transmet le SRS apériodique est déterminée par des configurations relatives à un domaine fréquentiel ; les configurations relatives au domaine fréquentiel sont prédéterminées par l'eNB et l'UE, ou l'eNB transmet tout ou partie des configurations relatives au domaine fréquentiel à l'UE par l'intermédiaire de la signalisation de commande de liaison descendante ; et les configurations relatives au domaine fréquentiel comprennent une bande passante de domaine fréquentiel et une position initiale de domaine fréquentiel pour transmettre le SRS apériodique ;
lorsque l'eNB déclenche l'UE pour transmettre le SRS apériodique sur plusieurs sous-trames de liaison montante, la position de domaine fréquentiel à laquelle l'UE transmet le SRS apériodique est déterminée par les configurations relatives au domaine fréquentiel ; toutes les configurations relatives au domaine fréquentiel sont prédéterminées par l'eNB et l'UE, ou l'eNB transmet les configurations relatives au domaine fréquentiel de toutes les sous-trames de liaison montante à l'UE par l'intermédiaire de la signalisation de commande de liaison descendante, ou l'eNB et l'UE prédéterminent les configurations d'une partie des sous-trames de liaison montante et les configurations d'une autre partie des sous-trames de liaison montante sont envoyées à l'UE par l'intermédiaire de la signalisation de commande de liaison descendante ; et les configurations relatives au domaine fréquentiel comprennent la bande passante de domaine fréquentiel et la position initiale de domaine fréquentiel pour transmettre le SRS apériodique ; une bande passante du SRS apériodique est identique à une bande passante pour l'UE transmettant le SRS périodique.

**7.** Procédé selon la revendication 1, dans lequel,
la position initiale de domaine fréquentiel du SRS périodique après le SRS apériodique n'est pas influencée par le SRS apériodique, ou
l'UE considère comme un point de départ la position de domaine fréquentiel du SRS apériodique sur la première sous-trame dans les sous-trames de liaison montante et, en association avec la règle de saut de fréquence du SRS périodique, calcule ensuite les positions initiales de domaine fréquentiel de chaque SRS périodique ou des SRS apériodiques déclenchés par la même signalisation de commande de liaison descendante.

**8.** Procédé selon la revendication 1, dans lequel,
avant l'étape de transmission par l'UE du SRS apériodique, le procédé comprend en outre : si l'UE considère qu'il existe encore des SRS périodiques sur les sous-trames de liaison montante qui doivent être envoyées, la sélection par l'UE de la transmission : du SRS périodique ou du SRS apériodique.

**9.** Procédé selon la revendication 1, dans lequel,
l'eNB réserve des ressources pour le SRS apériodique, une ressource réservée est utilisée par un ou plusieurs UE, et l'eNB préconfigure un ou plusieurs types des ressources suivantes comme ressources de SRS apériodique réservées : des ressources de code, des ressources de domaine fréquentiel et des ressources de domaine temporel ;

l'eNB entraîne l'acquisition par l'UE des ressources de code réservées en configurant une séquence racine de SRS ou un décalage de cycle de séquence ; l'eNB entraîne l'acquisition par l'UE des ressources de domaine fréquentiel réservées en configurant des informations Comb ou des informations de bande de fréquences, dans lequel, les informations de bande de fréquences comprennent un point de départ et une bande passante de domaine fréquentiel ; et l'eNB entraîne l'acquisition par l'UE des ressources de domaine temporel réservées en configurant les sous-trames pour transmettre le SRS apériodique ;
l'eNB indique les ressources réservées utilisées pour la transmission de SRS apériodique par l'intermédiaire d'une signalisation de couche de commande de ressources radio.

**10.** Procédé selon la revendication 1, dans lequel,
la signalisation de commande de liaison descendante est une signalisation de couche physique ; et la signalisation de couche physique est une signalisation dans un canal de commande de liaison descendante physique.

**11.** Système de type Long Term Evolution-Advanced, LTE-A, comprenant un eNB et un ou plusieurs équipements utilisateur, UE, dans lequel,
l'eNB comprend un module de transmission qui est configuré pour : déclencher un ou plusieurs UE pour transmettre un signal de référence de sondage, SRS, apériodique sur une ou plusieurs sous-trames de liaison montante par l'intermédiaire d'une signalisation de commande de liaison descendante, afin d'entraîner l'utilisation par l'UE de ressources de SRS apériodique pour transmettre le SRS apériodique sur les sous-trames de liaison montante en fonction du déclenchement de l'eNB après la réception de la signalisation de commande de liaison descendante envoyée par l'eNB,
**caractérisé en ce que**, la position initiale de domaine fréquentiel du SRS apériodique sur la première sous-trame dans les sous-trames de liaison montante est la même que la position initiale de domaine fréquentiel d'un SRS périodique suivant à envoyer, ou la position initiale de domaine fréquentiel du SRS apériodique sur la première sous-trame dans les sous-trames de liaison montante est la même que la position initiale de domaine fréquentiel du SRS périodique avant une sous-trame de transmission du SRS apériodique ;
lorsque l'eNB déclenche l'UE pour transmettre le SRS apériodique sur plusieurs sous-trames de liaison montante, pour le reste des sous-trames de liaison montante à l'exception de la première sous-trame dans les sous-trames de liaison montante, la position initiale de domaine fréquentiel du SRS apériodique sur le reste des sous-trames de liaison montante est la même que la position initiale de domaine fréquentiel du SRS apériodique sur la première sous-trame, ou la position initiale de domaine fréquentiel du SRS apériodique dans le reste des sous-trames de liaison montante est obtenue au moyen d'un calcul selon une règle de saut de fréquence du SRS périodique,
la première sous-trame dans les sous-trames de liaison montante est : une sous-trame prédéterminée à l'avance par l'eNB et l'UE, ou une sous-trame signalée implicitement par l'eNB à l'UE par l'intermédiaire d'une sous-trame de liaison descendante transmettant la signalisation de commande de liaison descendante, ou une sous-trame signalée par l'eNB à l'UE par l'intermédiaire de la signalisation de commande de liaison descendante.

**12.** Équipement utilisateur dans un système de type Long Terme Evolution-Advanced, LTE-A, comprenant :

un module de réception, conçu pour : recevoir une signalisation de commande de liaison descendante, utilisée pour déclencher l'équipement utilisateur pour transmettre un signal de référence de sondage, SRS, apériodique sur une ou plusieurs sous-trames de liaison montante, à un eNB ; et
un module de transmission, conçu pour : après la réception de la signalisation de commande de liaison descendante envoyée par l'eNB, utiliser des ressources de SRS apériodique pour transmettre le SRS apériodique sur les sous-trames de liaison montante en fonction du déclenchement de l'eNB,
**caractérisé en ce que**, la position initiale de domaine fréquentiel du SRS apériodique sur la première sous-trame dans les sous-trames de liaison montante est la même que la position initiale de domaine fréquentiel d'un SRS périodique suivant à envoyer, ou la position initiale de domaine fréquentiel du SRS apériodique sur la première sous-trame dans les sous-trames de liaison montante est la même que la position initiale de domaine fréquentiel du SRS périodique avant une sous-trame de transmission du SRS apériodique ;
lorsque l'eNB déclenche l'UE pour transmettre le SRS apériodique sur plusieurs sous-trames de liaison montante, pour le reste des sous-trames de liaison montante à l'exception de la première sous-trame dans les sous-trames de liaison montante, la position initiale de domaine fréquentiel du SRS apériodique sur le reste des sous-trames de liaison montante est la même que la position initiale de domaine fréquentiel du SRS apériodique sur la première sous-trame, ou la position initiale de domaine fréquentiel du SRS apériodique dans le reste des sous-trames de liaison montante est obtenue au moyen d'un calcul selon une règle de saut de fréquence du SRS périodique,
la première sous-trame dans les sous-trames de liaison montante est : une sous-trame prédéterminée à l'avance par l'eNB et l'UE, ou une sous-trame signalée implicitement par l'eNB à l'UE par l'intermédiaire d'une sous-trame de liaison descendante transmettant la signalisation de commande de liaison descendante, ou une sous-trame signalée par l'eNB à l'UE par l'intermédiaire de la signalisation de commande de liaison descendante.

One radio frame ( 10 ms )

One time slot ( 0. 5 ms )

| #0 | #1 | #2 | #3 | | #18 | #19 |

············

One subframe

## FIG. 1

One radio frame (10ms)

One half-frame (5ms)

One time slot (0.5ms)    1ms

| Sub -frame #0 | Sub -frame #1 | Sub -frame #2 | Sub -frame #3 | Sub -frame #4 | Sub -frame #5 | Sub -frame #6 | Sub -frame #7 | Sub -frame #8 | Sub -frame #9 |

Time slot #0 | Time slot #1 | Time slot #4 | Time slot #5 | Time slot #6 | Time slot #7 | Time slot #8 | Time slot #9 | Time slot #10 | Time slot #11 | Time slot #14 | Time slot #15 | Time slot #16 | Time slot #17 | Time slot #18 | Time slot #19

One subframe (1ms)    DwPTS GP   UpPTS    DwPTS GP   UpPTS

## FIG. 2

One Resource Element (RE)

FIG. 3

Uplink system bandwidth

Layer 1 SRS bandwidth (maximum SRS bandwidth)

B_SRS = 0 (Layer 1)

B_SRS = 1 (Layer 2)

B_SRS = 2 (Layer 3)

B_SRS = 3 (Layer 4)

FIG. 4

SRS bandwidth

Comb (*Comb*) = 1

Comb (*Comb*) = 0

FIG. 5

Uplink system bandwidth

Layer 1 SRS bandwidth

SRS frequency domain initial position and bandwidth of UE1

SRS frequency domain initial position and bandwidth of UE2

SRS frequency domain initial position and bandwidth of UE3

FIG. 6

f

Transmission moment and frequency domain position of periodic SRS of UE1

Moment at which a cell may transmit an SRS

Transmission moment and frequency domain position of non-periodic SRS of UE1

System bandwidth

SRS bandwidth

0 1 2 3 4 5 6 7 8 9 0 1 2 3 4 5 6 7 8 9 0 1 2 3 4 5 6 7 8 9 0 ......

◄— Radio frame m —►◄— Radio frame m+1 —►

t

FIG. 7

Transmission moment and frequency domain position of periodic SRS of UE1

Transmission moment and frequency domain position of non-periodic SRS of UE1

Moment at which a cell may transmit an SRS

System bandwidth

SRS bandwidth

f

0 1 2 3 4 5 6 7 8 9 0 1 2 3 4 5 6 7 8 9 0 1 2 3 4 5 6 7 8 9 0 ......

←——Radio frame m——→←—Radio frame m+1—→

t

FIG. 8

Transmission moment and frequency domain position of periodic SRS of UE1

Transmission moment and frequency domain position of non-periodic SRS of UE1

Moment at which a cell may transmit an SRS

Transmission moment and frequency domain position of periodic SRS of UE1 when there is no non-periodic SRS

System bandwidth

SRS bandwidth

f

0 1 2 3 4 5 6 7 8 9 0 1 2 3 4 5 6 7 8 9 0 1 2 3 4 5 6 7 8 9 0 ......

←——Radio frame m——→←—Radio frame m+1—→

t

FIG. 9

FIG. 10

FIG. 11

FIG. 12

FIG. 13

Transmission moment and
frequency domain position
of periodic SRS of UE1

Transmission moment and
frequency domain position
of non-periodic SRS of UE1

Moment at which a cell
may transmit an SRS

FIG. 14

Transmission moment and
frequency domain position
of periodic SRS of UE1

Transmission moment and
frequency domain position
of non-periodic SRS of UE1

Moment at which a cell
may transmit an SRS

Transmission moment and
frequency domain position of
periodic SRS of UE1 when
there is no non-periodic SRS

FIG. 15

FIG. 16

FIG. 17

Transmission moment and frequency domain position of periodic SRS of UE1

Transmission moment and frequency domain position of non-periodic SRS of UE1

Moment at which a cell may transmit an SRS

Transmission moment and frequency domain position of periodic SRS of UE1 when there is no non-periodic SRS

f

System bandwidth

SRS bandwidth

0 1 2 3 4 5 6 7 8 9 0 1 2 3 4 5 6 7 8 9 0 1 2 3 4 5 6 7 8 9 0 ......

t

◄── Radio frame m ──►◄── Radio frame m+1──►

FIG. 18

Transmission moment and frequency domain position of periodic SRS of UE1

Transmission moment and frequency domain position of non-periodic SRS of UE1

Moment at which a cell may transmit an SRS

Transmission moment and frequency domain position of periodic SRS of UE1 when there is no non-periodic SRS

f

System bandwidth

SRS bandwidth

0 1 2 3 4 5 6 7 8 9 0 1 2 3 4 5 6 7 8 9 0 1 2 3 4 5 6 7 8 9 0 ......

t

◄── Radio frame m ──►◄── Radio frame m+1──►

FIG. 19

FIG. 20

FIG. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 101540631 A
- EP 2426831 A1

### Non-patent literature cited in the description

- Further Discussions on SRS Enhancements. **ERICSSON et al.** 3GPP DRAFT; R1-100860, 3RD GENERATION PARTNERSHIP PROJECT (3GPP). MOBILE COMPETENCE CENTRE, 16 February 2010
- Channel sounding enhancements for LTE-Advanced uplink. **NOKIA SIEMENS NETWORKS et al.** 3GPP DRAFT; R1-101438, 3RD GENERATION PARTNERSHIP PROJECT (3GPP). MOBILE COMPETENCE CENTRE, 16 February 2010
- SRS Enhancements for LTE-A. **CATT.** 3GPP DRAFT; R1-100893, 3RD GENERATION PARTNERSHIP PROJECT (3GPP). MOBILE COMPETENCE CENTRE, 16 February 2010
- Further consideration on Aperiodic/Periodic Sounding RS. **PANTECH.** 3GPP DRAFT; R1-100993, 3RD GENERATION PARTNERSHIP PROJECT (3GPP). MOBILE COMPETENCE CENTRE, 16 February 2010
- Discussion on Dynamic Aperiodic Sounding. **ASUSTEK.** 3GPP DRAFT; R1-100997 DISCUSSION ON DYNAMIC APERIODIC SOUNDING, 3RD GENERATION PARTNERSHIP PROJECT (3GPP). MOBILE COMPETENCE CENTRE, 16 February 2010
- Views on SRS Enhancements for LTE-A. **MOTOROLA.** 3GPP DRAFT; R1-101134-SRS ENHANCEMENTS LTE-A, 3RD GENERATION PARTNERSHIP PROJECT (3GPP). MOBILE COMPETENCE CENTRE, 17 February 2010